(19) Europäisches Patentamt
European Patent Office
Office européen des brevets

(11) **EP 2 474 815 B1**

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(51) Int Cl.:
***G01D 5/38*** *(2006.01)*

(21) Anmeldenummer: **11191451.1**

(22) Anmeldetag: **01.12.2011**

(54) **Optische Positionsmesseinrichtung**

Optical positioning device

Dispositif optique de mesure de la position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2010 DE 102010063216**
**06.09.2011 DE 102011082156**

(43) Veröffentlichungstag der Anmeldung:
**11.07.2012 Patentblatt 2012/28**

(73) Patentinhaber: **Dr. Johannes Heidenhain GmbH 83301 Traunreut (DE)**

(72) Erfinder: **Holzapfel, Wolfgang 83119 Obing (DE)**

(56) Entgegenhaltungen:
**EP-A1- 1 435 510    US-A- 5 696 374**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die vorliegende Erfindung betrifft eine optische Positionsmesseinrichtung gemäß dem Oberbegriff von Anspruch 1.

Eine gattungsgemäße optische Positionsmesseinrichtung ist aus der US 6,831,267 B2 bekannt; insbesondere sei hierbei auf die Figuren 11 und 50 verwiesen. Die in dieser Druckschrift vorgeschlagene Positionsmesseinrichtung dient zur hochauflösenden Erfassung der Relativposition einer Abtasteinheit und einer Maßverkörperung mit einer Messteilung, wobei die Abtasteinheit und die Maßverkörperung entlang mindestens einer Messrichtung gegeneinander bewegbar sind. Die Abtasteinheit umfasst eine Lichtquelle, eine erste kreisringförmige Abtastteilung, ein unmittelbar dahinter angeordnetes Reflektorelement, ein Strahlteilerelement sowie eine Detektionseinheit. Ein von der Lichtquelle emittiertes Strahlenbündel trifft auf die Messteilung auf, wo eine Aufspaltung in mindestens zwei Teilstrahlenbündel erfolgt. Die zur Abtasteinheit zurückreflektierten Teilstrahlenbündel werden über die erste Abtastteilung und das Reflektorelement wieder in Richtung der Messteilung reflektiert, wobei die Teilstrahlenbündel auf dem Weg zur Messteilung wiederum die erste Abtastteilung durchlaufen. Die erste Abtastteilung ist als Zirkulargitter ausgebildet. Ein derartiges Zirkulargitter besteht aus konzentrischen Gitterstegen, die radial äquidistant angeordnet sind. Nach der erneuten Reflexion an der Messteilung kommen die in Richtung Abtasteinheit propagierenden Teilstrahlenbündel zur Überlagerung und erfahren über das Strahlteilerelement eine Umlenkung in Richtung Detektionseinheit, wo mehrere positionsabhängige Abtastsignale erfassbar sind. Durch zusätzliche polarisationsoptische Bauelemente im Strahlengang zwischen der Messteilung bzw. Maßverkörperung und dem ersten Abtastgitter werden die beiden Teilstrahlenbündel zueinander orthogonal polarisiert, so dass mithilfe bekannter polarisationsoptischer Methoden in der Detektionseinheit hochauflösende phasenverschobene Abtastsignale im Fall der Relativbewegung von Maßverkörperung und Abtasteinheit erzeugbar sind.

Die aus den beiden erwähnten Figuren der US 6,831,267 bekannte optische Positionsmesseinrichtung soll aufgrund der weitgehenden Zylindersymmetrie sehr große Toleranzen bzgl. der Verkippung der Abtasteinheit gegenüber der Maßverkörperung aufweisen; insbesondere soll hierbei eine besondere Unempfindlichkeit gegenüber sog. Moiré-Verkippungen vorliegen. Hierunter versteht man Verkippungen von Abtasteinheit und Maßverkörperung um eine Drehachse, die senkrecht zur Messteilungsebene orientiert ist.

Durchgeführte Simulationen zu einer derartigen optischen Positionsmesseinrichtung ergeben jedoch diverse Schwachpunkte der vorgeschlagenen Abtastoptik. So beeinflussen die Messteilung und die erste Abtastteilung die Wellenfront der gebeugten Teilstrahlenbündel sehr unterschiedlich. Insbesondere verzerrt das Zirkulargitter der ersten Abtastteilung die Wellenfronten erheblich, da die Gitterstege kreisförmig gebogen sind. Eine derart ausgebildete erste Abtastteilung ist für die Abtastung einer linearen Messteilung ungeeignet. Es resultieren große Wellenfrontverzerrungen in den aufgespaltenen Teilstrahlenbündeln, die zu einem äußerst geringen Modulationsgrad der Abtastsignale führen. Da die Wellenfrontverzerrungen quer zur Strahlrichtung stark zunehmen, muss der Strahlquerschnitt des von der Lichtquelle her einfallenden Strahlenbündels sehr klein gewählt werden. Als Konsequenz hieraus resultiert eine hohe Verschmutzungs- und Defektempfindlichkeit der optischen Positionsmesseinrichtung.

Noch schwerwiegender ist jedoch, dass die großen Wellenfrontverzerrungen in der vorgeschlagenen optischen Positionsmesseinrichtung zu extrem kleinen Anbau-, Betriebs- und Fertigungstoleranzen führen. Bei solchen Anbau-, Betriebs- und Fertigungstoleranzen entstehen kleine laterale Verschiebungen der beiden Teilstrahlenbündel. Diese führen bei großen Wellenfrontverzerrungen zu erheblichen lokalen Phasenverschiebungen und damit zu einer ungenügenden Interferenz der überlagerten Teilstrahlenbündel. Dies wiederum hat einen signifikanten Abfall der Abtastsignalintensität zur Folge. Die bei Simulationen festgestellten, äußerst kleinen Anbau- und Fertigungstoleranzen können nur in wenigen Anwendungsfällen akzeptiert werden. Es handelt sich hierbei um diejenigen Fälle, bei denen einerseits eine große Moiré-Kipptoleranz gefordert wird, andererseits aber alle anderen Toleranzen deutlich kleiner sein müssen als bei handelsüblichen optischen Positionsmesseinrichtungen.

Eine weitere optische Positionsmesseinrichtung ist aus der US 5,696,374 bekannt. Im Ausführungsbeispiel der Figur 5 gelangt das von einer Lichtquelle emittierte Strahlenbündel zunächst auf eine reflektive Messteilung, wo eine Aufspaltung in zwei Teilstrahlenbündel resultiert. Die von der Messteilung in Richtung einer Abtasteinheit reflektierten Teilstrahlenbündel gelangen über eine Abtastteilung auf ein Reflektorelement und werden davon in Richtung Messteilung zurückreflektiert. Auf dem Weg zur Messteilung passieren die Teilstrahlenbündel erneut die Abtastteilung. Am Auftreffort der Messteilung werden die Teilstrahlenbündel wiederum reflektiert und wandern überlagert zu einer nachgeordneten Detektoreinheit. Auch diese Positionsmesseinrichtung weist als maßgeblichen Nachteil eine erhebliche Empfindlichkeit gegenüber Verkippungen von Maßverkörperung und Abatsteinheit auf.

Ein hierzu vergleichbarer Abtaststrahlengang ist ferner aus der EP 1 435 510 bekannt. Anstelle der in der US 5,696,374 vorgesehenen Transmissions-Abtastgitter und Reflektorelemente ist hier jedoch jeweils ein Reflexionsgitter an dieser Stelle in den Teilstrahlenbündeln vorgesehen. Es resultieren in Bezug auf die Verkippempfindlicheit vergleichbare Probleme wie in den oben diskutierten Positionsmesseinrichtungen.

Aufgabe der vorliegenden Erfindung ist es, eine hochauflösende optische Positionsmesseinrichtung anzugeben, die eine Unempfindlichkeit gegenüber derjenigen Verkippung der Abtasteinheit relativ zur Maßverkörperung mit der Messteilung aufweist, deren Achse senkrecht zur Messteilungsebene orientiert ist, und die gleichzeitig große Toleranzen gegenüber sonstigen Verkippungen und Verschiebungen der Maßverkörperung besitzt.

Vorteilhafte Ausführungen der erfindungsgemäßen optischen Positionsmesseinrichtung ergeben sich aus den Maßnahmen in den abhängigen Ansprüchen.

Die erfindungsgemäße optische Positionsmesseinrichtung umfasst eine Abtasteinheit und eine Maßverkörperung mit einer Messteilung, wobei die Abtasteinheit und die Maßverkörperung entlang mindestens einer Messrichtung (x) gegeneinander bewegbar sind. Die Abtasteinheit weist eine Lichtquelle, eine erste kreisringförmige Abtastteilung, ein Reflektorelement, ein Strahlteilerelement sowie eine Detektionseinheit auf. Ein von der Lichtquelle emittiertes Strahlenbündel trifft auf die Messteilung auf, wo eine Aufspaltung in mindestens zwei Teilstrahlenbündel erfolgt. Die in Richtung der Abtasteinheit propagierenden Teilstrahlenbündel treffen über die erste Abtastteilung auf das Reflektorelement. Am Reflektorelement erfahren die Teilstrahlenbündel eine Reflexion in Richtung der Messteilung und passieren auf dem Weg zur Messteilung die erste Abtastteilung. Nach der erneuten Beaufschlagung der Messteilung kommen die in Richtung Abtasteinheit propagierenden Teilstrahlenbündel zur Überlagerung und erfahren über das Strahlteilerelement eine Umlenkung in Richtung Detektionseinheit, wo mehrere positionsabhängige, phasenverschobene Abtastsignale erfassbar sind. Die erste Abtastteilung ist derart ausgebildet, dass darüber eine Fokussierung der auf sie von der Messteilung her einfallenden Teilstrahlenbündel auf das Reflektorelement erfolgt. Ferner erfolgt über die erste Abtastteilung eine Rekollimation der Teilstrahlenbündel, die nach der Reflexion am Reflektorelement in Richtung Messteilung propagieren.

Hierbei kann ferner vorgesehen sein, dass

- zumindest ein polarisationsoptisches Bauelement im Strahlengang der aufgespaltenen Teilstrahlenbündel angeordnet ist, über das die beiden an der Messteilung aufgespaltenen Teilstrahlenbündel eine linear oder zirkular orthogonale Polarisation zueinander erfahren und
- in der Detektionseinheit vor mehreren optoelektronischen Detektorelementen Polarisatoren angeordnet sind.

Es ist möglich, dass über das zumindest eine polarisationsoptische Bauelement entweder

- eine orthogonale Polarisation der Teilstrahlenbündel in zwei diametral angeordneten Sektoren resultiert oder
- eine lineare Polarisation resultiert, die azimutal ortsabhängig über den Umfang um 180° dreht.

Als polarisationsoptisches Bauelement kann etwa mindestens ein Hochfrequenzgitter im Abtaststrahlengang der Teilstrahlenbündel angeordnet sein. Es ist desweiteren möglich, dass das Reflektorelement als polarisationsoptisches Bauelement ausgebildet ist.

In einer weiteren Ausführungsform kann vorgesehen werden, dass mehrere polarisationsoptische Bauelemente, ausgebildet als Verzögerungsplatten im Abtaststrahlengang der Teilstrahlenbündel zwischen der Messteilung und der ersten Abtastteilung oder zwischen der ersten Abtastteilung und dem Reflektorelement angeordnet sind.

Vorzugsweise propagieren nach der zweiten Beaufschlagung der Messteilung die überlagerten Teilstrahlenbündel entlang der optischen Achse.

Mit Vorteil ist die erste Abtastteilung als diffraktive Ringlinse mit einer quadratischen Phasenfunktion gemäß

$$\phi_{A1}(r) = -\frac{\pi}{d_M \cdot r_0} \cdot r^2$$

ausgebildet, mit

$\Phi_{A1}(r)$ := radiusabhängige Phasenfunktion

$r$ := Radius

$d_M$ := Teilungsperiode der Messteilung

$r_0$ := radialer Abstand des auf die diffraktive Ringlinse treffenden Hauptstrahls

Es ist ferner möglich, dass die Teilstrahlenbündel nach der ersten Beaufschlagung der ersten Abtastteilung parallel zur optischen Achse propagieren.

Schließlich kann die erste Abtastteilung und das Reflektorelement mit Ausnahme der polarisationsoptischen Komponenten zylindersymmetrisch zur optischen Achse ausgebildet sein und das von der Lichtquelle emittierte Strahlenbündel entlang der optischen Achse propagieren.

Es kann vorgesehen sein, dass die Messteilung

- als eindimensionale lineare Teilung oder
- als zweidimensionale lineare Teilung oder
- als Radialteilung oder
- als Zirkularteilung ausgebildet ist.

Desweiteren kann eine diffraktive Struktur in dem Bereich einer Abtastplatte angeordnet sein, den das von der Lichtquelle emittierte Strahlenbündel durchläuft, wobei die diffraktive Struktur als Kollimationslinse für das von der Lichtquelle her einfallende Strahlenbündel und/oder als Gitterstrahlteiler für die von der Messteilung her einfallenden überlagerten Teilstrahlenbündel dient und wobei auf der Vorder- und Rückseite der Abtastplatte die erste Abtastteilung und das Reflektorelement oder umgekehrt angeordnet sind.

In einer möglichen Ausführungsform kann die Detektionseinheit einen Strahlteiler aufweisen, welcher die einfallenden überlagerten Teilstrahlenbündel räumlich aufspaltet und die aufgespaltenen Teilstrahlenbündel jeweils Polarisatoren durchlaufen, bevor sie auf optoelektronische Detektorelemente auftreffen.

Ferner ist es möglich, dass der Strahlteiler als Gitterstrahlteiler ausgebildet ist.

In einer weiteren Variante der erfindungsgemäßen optischen Positionsmesseinrichtung kann im Strahlengang eines Teilstrahlenbündels eine optische Verzögerungsstrecke angeordnet sein.

Als maßgeblicher Vorteil der erfindungsgemäßen optischen Positionsmesseinrichtung resultiert die gewünschte hohe Toleranz gegenüber Moiré-Verkippungen von Abtasteinheit und Maßverkörperung bei gleichzeitig großen sonstigen Kipp- und Lagetoleranzen. Dadurch besitzt die erfindungsgemäße optische Positionsmesseinrichtung auch große Anbau- und Betriebstoleranzen. Dies ist maßgeblich auf die Ausbildung der ersten Abtastteilung als diffraktive Ringlinse mit einem optimierten Phasenverlauf und einem beabstandeten Reflektor zurückzuführen, der sich in der Brennebene der diffraktiven Ringlinse befindet. Dadurch lassen sich störende Wellenfrontverzerrungen im Abtaststrahlengang minimieren.

Desweiteren ist es möglich, bei der Abtastung der Maßverkörperung bzw. der Messteilung mit einem hinreichend großen Strahlquerschnitt zu arbeiten, was wiederum eine geringe Verschmutzungsempfindlichkeit zur Folge hat.

Weitere Vorteile sowie Einzelheiten der vorliegenden Erfindung ergeben sich aus der nachfolgenden Beschreibung von mehreren Ausführungsbeispielen anhand der beiliegenden Figuren.

Es zeigt hierbei

Figur 1         eine stark schematisierte Darstellung einer ersten Ausführungsform der erfindungsgemäßen optischen Positionsmesseinrichtung;

Figur 2a, 2b    je eine Ansicht von Komponenten der optischen Positionsmesseinrichtung aus Figur 1;

Figur 3         eine stark schematisierte Darstellung der Detektionseinheit der optischen Positionsmesseinrichtung aus Figur 1;

Figur 4         eine stark schematisierte Darstellung einer zweiten Ausführungsform der erfindungsgemäßen optischen Positionsmesseinrichtung;

Figur 5a, 5b    je eine Ansicht von Komponenten der optischen Positionsmesseinrichtung aus Figur 4;

Figur 6         eine stark schematisierte Darstellung der Detektionseinheit der optischen Positionsmesseinrichtung aus Figur 4;

Figur 7         eine stark schematisierte Darstellung einer dritten Ausführungsform der erfindungsgemäßen optischen Positionsmesseinrichtung;

Figur 8         eine stark schematisierte Darstellung einer vierten Ausführungsform der erfindungsgemäßen optischen Positionsmesseinrichtung;

Figur 9a, 9b    je eine Ansicht von Komponenten der optischen Positionsmesseinrichtung aus Figur 8;

Figur 10        eine stark schematisierte Darstellung der Detektionseinheit der optischen Positionsmesseinrichtung aus Figur 8;

Figur 11        eine stark schematisierte Darstellung einer fünften Ausführungsform der erfindungsgemäßen optischen Positionsmesseinrichtung;

Figur 12          eine Ansicht einer Komponente der optischen Positionsmesseinrichtung aus Figur 11;

Figur 13          eine stark schematisierte Darstellung einer sechsten Ausführungsform der erfindungsgemäßen optischen Positionsmesseinrichtung;

Figur 14          eine Ansicht einer Komponente der optischen Positionsmesseinrichtung aus Figur 13;

Figur 15          eine stark schematisierte Darstellung einer siebten Ausführungsform der erfindungsgemäßen optischen Positionsmesseinrichtung;

Figur 16          eine Ansicht einer Komponente der optischen Positionsmesseinrichtung aus Figur 15;

Figur 17          eine schematisiert dargestellte Komponente einer ersten Variante der siebten Ausführungsform der erfindungsgemäßen optischen Positionsmesseinrichtung.

Bevor nachfolgend verschiedene konkrete Ausführungsbeispiele der erfindungsgemäßen optischen Positionsmesseinrichtung im Detail erläutert werden, sei vorab das allen Varianten zugrundliegende Abtastprinzip erläutert.

So ist vorgesehen, dass eine Maßverkörperung bzw. die darauf angeordnete reflektive oder transmittive Messteilung entlang der optischen Achse von einem - vorzugsweise kollimierten - Strahlenbündel einer Lichtquelle beleuchtet wird. An der Messteilung resultiert eine Aufspaltung bzw. Beugung des einfallenden Strahlenbündels in zwei Teilstrahlenbündel +1./-1. Beugungsordnung, die in Richtung der Abtasteinheit propagieren. Die Teilstrahlenbündel werden daraufhin jeweils über eine erste Abtastteilung auf ein im Strahlengang nachgeordnetes Reflektorelement fokussiert. Die erste Abtastteilung ist hierbei vorzugsweise als zylindersymmetrische, diffraktive Ringlinse ausgebildet. Im Hinblick auf die konkrete Ausgestaltung des Reflektorelements gibt es mehrere Möglichkeiten, die anhand der konkreten Ausführungsbeispiele noch im Detail erläutert werden. So kann etwa das Reflektorelement als reflektierende zweite Abtastteilung oder aber als Kombination aus einem Spiegel und ein oder mehreren polarisationsoptischen Bauelementen ausgebildet werden etc.. Das Reflektorelement ist in der Brennebene der zylindersymmetrischen diffraktiven Ringlinse angeordnet. Vom Reflektorelement erfolgt anschließend eine Rückreflexion der beiden Teilstrahlenbündel in Richtung der ersten Abtastteilung.

Über eine geeignete Ausbildung von Komponenten im Abtaststrahlengang wird zudem sichergestellt, dass die beiden an der Messteilung bzw. Maßverkörperung aufgespaltenen Teilstrahlenbündel orthogonal zueinander polarisiert sind. So können die Teilstrahlenbündel etwa eine linear orthogonale Polarisation zueinander erfahren oder aber eine zirkular orthogonale Polarisation zueinander. Hierzu ist vorzugsweise zumindest eines der verschiedenen Elemente im Strahlengang als polarisationsoptisches Bauelement auszubilden. So kann etwa vorgesehen sein, die Messteilung oder mindestens eine von ggf. mehreren Abtastteilungen als polarisationsoptisches Bauelement auszubilden. Desweiteren ist es möglich, zusätzliche polarisationsoptische Bauelemente im Abtaststrahlengang anzuordnen, beispielsweise Verzögerungsplättchen und/oder Polarisatoren etc..

Beim zweiten Passieren der ersten Abtastteilung werden die vom Reflektorelement zurückreflektierten Teilstrahlenbündel über eine erneute Beugung jeweils rekollimiert und propagieren anschließend als kollimierte Teilstrahlenbündel in Richtung der Messteilung bzw. der Maßverkörperung. An der Messteilung erfahren die auftreffenden Teilstrahlenbündel jeweils eine erneute Beugung in +1./-1. Beugungsordnungen. Derart werden die reflektierten Teilstrahlenbündel wieder zu einem einzigen Strahlenbündel überlagert, das nach dem zweiten Beaufschlagen der Messteilung entlang der optischen Achse in Richtung des von der Lichtquelle her einfallenden Strahlenbündels propagiert. Über ein im Strahlengang der zurückreflektierten Teilstrahlenbündel **angeordnetes** nicht-polarisationsoptisches Strahlteilerelement wird das überlagerte Paar von Teilstrahlenbündeln vom in Gegenrichtung propagierenden, einfallenden Strahlenbündel separiert und in Richtung einer Detektionseinheit umgelenkt. Die Detektionseinheit umfasst verschiedene polarisationsoptische Bauelemente sowie mehrere optoelektronische Detektorelemente zur Erzeugung von mindestens zwei phasenverschobenen Abtastsignalen aus dem darauf einfallenden Paar überlagerter Teilstrahlenbündel. Im Fall der Relativbewegung von Maßverkörperung und Abtasteinheit resultieren derart mehrere zueinander phasenverschobene Abtastsignale respektive Inkrementalsignale, die in üblicher Art und Weise weiterverarbeitbar sind.

Vorzugsweise sind hierbei die Lichtquelle, die erste Abtastteilung, das Reflektorelement, das Strahlteilerelement sowie die Detektionseinheit in einer Abtasteinheit angeordnet, die gegenüber der Maßverkörperung mit der Messteilung in mindestens einer Messrichtung bewegbar ist.
Der Abtaststrahlengang der erfindungsgemäßen optischen Positionsmesseinrichtung bietet neben den bereits oben erwähnten Vorteilen eine Reihe weiterer Vorteile gegenüber bekannten optischen Positionsmesseinrichtungen.

Die Kombination aus diffraktiver Ringlinse der ersten Abtastteilung, die zweimal durchlaufen wird, und dem in der Brennebene angeordneten Reflektorelement ergibt hinsichtlich der optischen Wirkung einen Retroreflektor. Dieser wandelt einfallende ebene Strahlenbündel wieder in entgegengesetzt zurücklaufende, wiederum ebene Strahlenbündel um. Im Gegensatz zum Zirkulargitter entstehen hierbei keine signifikanten Wellenfrontverzerrungen.

So können die vorgeschlagenen Abtastgitter vorzugsweise als planare, diffraktive Linsen ausgebildet werden, die deutlich genauer und mit weit geringeren Herstellkosten gefertigt werden können als refraktive Linsen. Die mit derartigen Abtastgittern resultierenden Wellenfrontdeformationen in den Teilstrahlenbündeln sind zudem deutlich geringer als im Fall refraktiver Linsen.

Durch die frei wählbare Apertur einer diffraktiven Linse kann desweiteren auf einfache Weise eine Ringlinse ausgebildet werden. Die Ringlinse beeinflusst nur die abgelenkten Teilstrahlenbündel nicht aber ein im Zentrum der Ringlinse hindurchtretendes Strahlenbündel. Dadurch kann verhindert werden, dass das beleuchtende und das in Gegenrichtung propagierende überlagerte Strahlenbündel entlang der optischen Achse dieselbe Linse durchlaufen muss. Da die Ringlinse speziell auf die Fokussierung schräg einfallender Teilstrahlenbündel optimiert werden muss, wäre sie für die Kollimation eines beleuchtenden Strahlenbündels auf der optischen Achse völlig ungeeignet und würde große Wellenfrontaberrationen erzeugen. Die einfache Aperturbegrenzung durch eine diffraktive Ringlinse erlaubt somit eine getrennte Beeinflussung eines zentralen Strahlenbündels und der schräg abgelenkten Teilstrahlenbündel. Erst dadurch ist eine ausreichende Minimierung der Wellenfrontaberrationen der erfindungsgemäßen Positionsmesseinrichtung möglich.

Natürlich kann innerhalb der Ringlinse eine weitere diffraktive Linse zum Kollimieren des Beleuchtungsstrahlenbündels vorgesehen werden, die entsprechend für eine Kollimationsfunktion optimiert ist. Bei refraktiven Linsen wäre eine derartige Aperturtrennung in einen Ring- und einen zentralen Bereich mit unterschiedlichen Ablenkfunktionen nicht möglich, da ein hochgenauer Polierprozess keine scharfen Übergänge zulässt.

Ferner erlauben die optimierte Wahl des Phasenverlaufs der Ringlinse in der ersten Abtastteilung und die optimale Wahl weiterer Parameter der optischen Positionsmesseinrichtung besonders große Anbau-, Betriebs- und Fertigungstoleranzen auf Seiten der erfindungsgemäßen optischen Positionsmesseinrichtung.

Desweiteren ist durch die axiale Beleuchtung und das axial austretende, überlagerte Strahlenbündel sichergestellt, dass der Abtaststrahlengang von der Aufspaltung bis zur Überlagerung der Teilstrahlenbündel streng zylindersymmetrisch ist. Abweichungen von der Zylindersymmetrie betreffen nur Bauelemente im Abtaststrahlengang, die ausschließlich die Polarisation der Teilstrahlenbündel nicht aber deren Strahlrichtung oder deren Strahlort beeinflussen. Diese Abweichung von der Zylindersymmetrie ist notwendig, um mehrere phasenverschobene Abtastsignale zu erzeugen.

Im Rahmen der vorliegenden Erfindung können ferner besonders driftfreie Abtastoptiken durch einen monolithischen Aufbau sichergestellt werden, bei dem etwa auf den beiden Seiten einer Abtastplatte die erste Abtastteilung und das Reflektorelement aufgebracht werden.

Nachfolgend werden nunmehr verschiedene konkrete Ausführungsformen der erfindungsgemäßen optischen Positionsmesseinrichtung beschrieben, die jeweils auf dem vorhergehend erläuterten Abtastprinzip basieren.

## Erste Ausführungsform

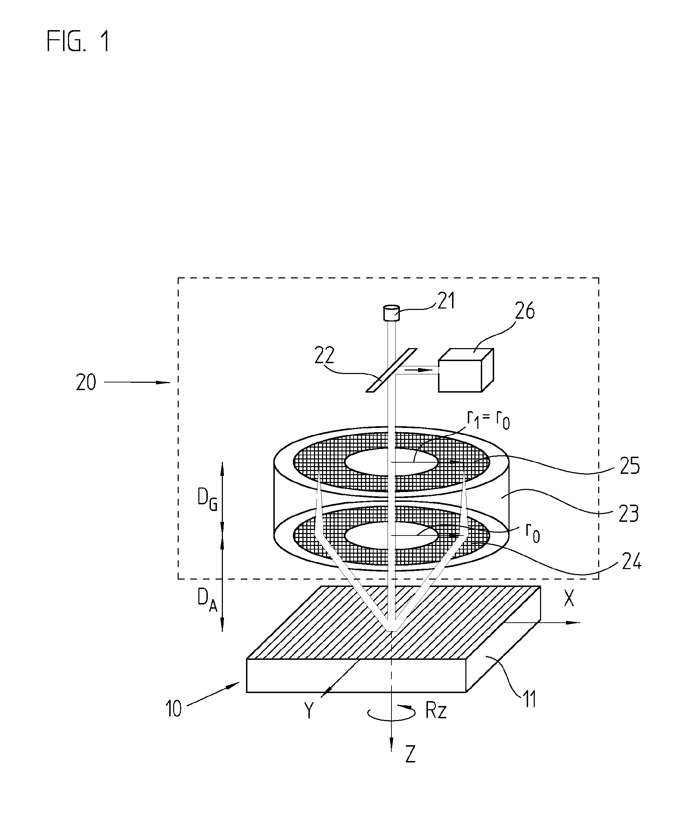

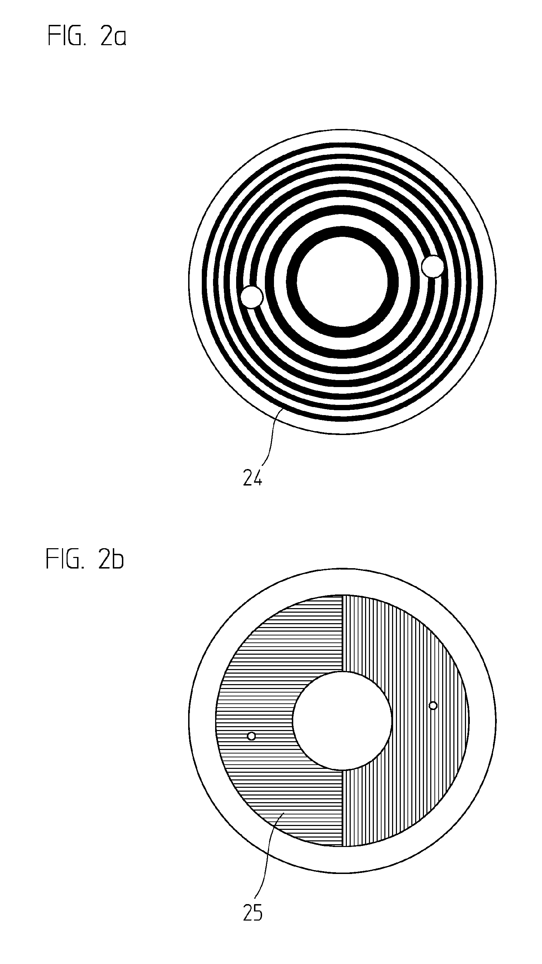

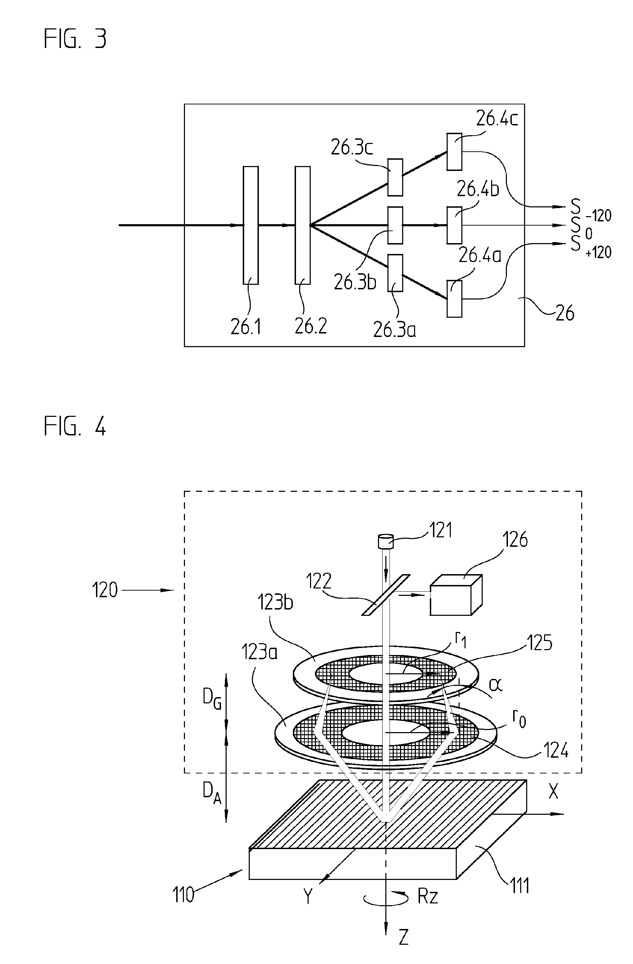

Eine erste Ausführungsform der erfindungsgemäßen optischen Positionsmesseinrichtung sei anhand der Figuren 1, 2a, 2b und 3 erläutert. Figur 1 zeigt hierbei eine stark schematisierte Darstellung der optischen Positionsmesseinrichtung, Figur 2a und 2b je eine Ansicht von Komponenten der Positionsmesseinrichtung und Figur 3 eine stark schematisierte Darstellung der Detektionseinheit.

Die erfindungsgemäße optische Positionsmesseinrichtung umfasst wie in Figur 1 ersichtlich eine Maßverkörperung 10 mit einer Messteilung 11 sowie eine hierzu in der angegebenen Messrichtung x bewegliche Abtasteinheit 20. Im vorliegenden Ausführungsbeispiel ist die Messteilung 11 hierbei als reflektive Messteilung ausgebildet. Maßverkörperung 10 und Abtasteinheit 20 sind üblicherweise mit zwei - nicht dargestellten - zueinander, entlang der Messrichtung x verschiebbaren Objekten, beispielsweise Maschinenkomponenten, verbunden, deren Relativposition zu bestimmen ist. Die über die Positionsmesseinrichtung erzeugten Abtastsignale werden einer ebenfalls nicht dargestellten Steuereinheit zur Weiterverarbeitung - beispielsweise einer Maschinensteuerung - zugeführt.

Im folgenden wird nunmehr anhand der Figuren 1, 2a, 2b der Abtaststrahlengang des ersten Ausführungsbeispiels erläutert.

Das beleuchtende Strahlenbündel einer linear polarisierten und kollimierten Lichtquelle 21 durchtritt zunächst unabgelenkt ein nichtpolarisierendes Strahlteilerelement 22 und wird dann entlang einer optischen Achse Z durch einen zentralen Fensterbereich einer Abtastplatte 23 in Richtung der Maßverkörperung 10 gelenkt. Die lineare Messteilung 11 auf der Oberfläche der Maßverkörperung 10, deren Gitterkonstante bzw. Teilungsperiode im Weiteren mit $d_M$ bezeichnet wird, spaltet das einfallende Strahlenbündel in zwei reflektierte Teilstrahlenbündel in +/-1. Beugungsordnung auf. Die beiden reflektierten Teilstrahlenbündel treffen dann symmetrisch zur optischen Achse Z auf eine transmittive erste Abtastteilung 24, die auf der Vorderseite der Abtastplatte 23 angeordnet ist und einen Abstand $D_A$ von der Maßverkörperung aufweist 10; der Abstand $D_A$ sei nachfolgend auch als Abtastabstand $D_A$ bezeichnet. Als Vorderseite der Abtastplatte 23 wird hierbei die der Maßverkörperung 10 zugewandte Seite der Abtastplatte 23 bezeichnet, als Rückseite die entgegengesetzte Seite der Abtastplatte 23. Die erste Abtastteilung 24 ist in diesem Ausführungsbeispiel als transmittive, diffraktive Ringlinse ausgebildet, die die beiden einfallenden Teilstrahlenbündel parallel zur optischen Achse Z lenkt und gleichzeitig auf die Rückseite der Abtastplatte 23 fokussiert. Auf der Rückseite der Abtastplatte 23, die eine Abtastplattendicke $D_G$ aufweist, ist ein Reflektorelement 25 angeordnet. Über die erste Abtastteilung 24 erfolgt somit eine Fokussierung der darauf einfallenden Teilstrahlenbündel auf das Reflektorelement 25. Dieses ist im vorliegenden Ausführungsbeispiel als ringförmige zweite Abtastteilung in Form eines reflektiven Hochfrequenzgitters ausgebildet, das nur in nullter Beugungsordnung reflektiert. Das Hochfrequenzgitter dient zur orthogonalen Polarisierung der beiden darauf auftreffenden Teilstrahlenbündel, wie nachfolgend noch genauer erläutert wird. Ansonsten wirkt das Hochfrequenzgitter optisch wie ein Spiegel, so dass die beiden darauf einfallenden Teilstrahlenbündel entgegengesetzt zum ursprünglichen, einfallenden Strahlenverlauf ohne Strahlversatz zurücklaufen. Die beiden Teilstrahlenbündel gelangen dann wieder auf die erste Abtastteilung 24 auf der Vorderseite der Abtastplatte 23. Über die als diffraktive Ringlinse ausgebildete erste Abtastteilung werden die Teilstrahlenbündel beim Passieren rekollimiert und gleichzeitig schräg zur optischen Achse Z abgelenkt. Anschließend treffen die beiden Teilstrahlenbündel wieder überlappend auf die Maßverkörperung 10, die diese nach erneuter Beugung in +1. bzw. -1. Beugungsordnung reflektiert und kollinear entlang der optischen Achse Z überlagert. Daraufhin durchtritt das überlagerte Strahlenbündel erneut den inneren Fensterbereich der Abtastplatte 23 und wird vom nichtpolarisierenden Strahlteilerelement 22 auf eine Detektionseinheit 26 umgelenkt. In der Detektionseinheit 26 werden - wie nachfolgend noch im Detail beschrieben - phasenverschobene Abtastsignale erzeugt.

Im Folgenden seien vorteilhafte Ausgestaltungsmöglichkeiten sowie die Funktion der verschiedenen Komponenten der erfindungsgemäßen optischen Positionsmesseinrichtung näher erläutert.

Die Lichtquelle 21 ist vorzugsweise als Halbleiter-Laserdiode ausgebildet, die Strahlung im Wellenlängenbereich $\lambda$ = 400nm - 1500nm emittiert. Besonders geeignet als Lichtquelle 21 ist etwa eine Streifenleiter-Laserdiode oder eine VCSEL-Lichtquelle (Vertical Cavity Surface Emitting Laser). Um messfehlerverursachende longitudinale Modensprünge zu vermeiden, kann die Halbleiter-Laserdiode strommoduliert betrieben werden, wie dies z.B. in der DE 102004053082 A1 der Anmelderin beschrieben ist. Die Modulationsfrequenz ist hierbei vorzugsweise höher als die Eingangsbandbreite der nicht dargestellten Photoelement-Verstärker der Detektionseinheit 26 zu wählen, so dass keine entsprechende Modulation der Abtastsignale auftreten kann. Eine derartige Strommodulation der Halbleiter-Laserdiode mittelt auch die eventuell entstehenden Interferenzen mit Störstrahlenbündeln weg. Diese können ggf. durch eine Reflexion des beleuchtenden Strahlenbündels an den Fensterbereichen der Abtastplatte 23 oder an der Messteilung 11 in 0. Beugungsordnung entstehen. Aus demselben Grund sind als geeignete Lichtquellen 21 für die erfindungsgemäße optische Positionsmesseinrichtung longitudinal und/oder transversal multimodige Halbleiter-Laserdioden mit kurzen Kohärenzlängen von unter 1 mm zu bevorzugen. In besonderen Fällen, insbesondere bei kleinen Abtastabständen $D_A$ bzw. kleinen Abtastplattendicken $D_G$, lassen sich auch LEDs als Lichtquellen 21 einsetzen.

Für Positionsmesseinrichtungen, die bei hohen Verfahrgeschwindigkeiten von Abtasteinheit 20 und Maßverkörperung 10 eine hohe Messgenauigkeit liefern sollen, muss üblicherweise ein exakter Messzeitpunkt nach einer Triggerung der Messung definiert sein. Ein zeitlich exakt-determinierter Messzeitpunkt kann über den gepulsten Betrieb der Halbleiter-Laserdiode gewährleistet werden. Eine kurze Pulsdauer verkürzt zudem die Kohärenzlänge der Halbleiter-Laserdiode, so dass die oben erwähnten Interferenzen mit Störstrahlenbündeln über den gepulsten Betrieb ebenfalls effektiv unterdrückt werden können.

Als Messteilungen 11 auf Seiten der Maßverkörperung 10 eignen sich besonders gut Reflexions-Phasengitter mit einem Phasenhub von ca. 180° und einer Stegbreite von ca. $d_M/2$, bei denen die nullte Beugungsordnung unterdrückt ist. Vorteilhaft ist hierbei auch ein quasi-planarer Aufbau der Teilungsstrukturen der Messteilung 11. Es sei an dieser Stelle darauf hingewiesen, dass alternativ zu einer reflektiven Messteilung natürlich auch eine transmittive Messteilung in der erfindungsgemäßen optischen Positionsmesseinrichtung verwendet werden kann.

Im vorliegenden ersten Ausführungsbeispiel der erfindungsgemäßen optischen Positionsmesseinrichtung ist die Messteilung 11 als eindimensionale lineare Teilung ausgebildet. Alternative hierzu kann auch vorgesehen sein, dass die Messteilung als zweidimensionale lineare Teilung, als Radialteilung oder als Zirkularteilung und/oder als Kombination hieraus ausgebildet wird. Einzelne dieser Varianten werden in der nachfolgenden Beschreibung noch näher erläutert.

Die erste Abtastteilung 24 auf der Vorderseite der Abtastplatte 24, die in einer Draufsicht in Figur 2a dargestellt ist, weist die optische Funktionalität einer diffraktiven Ringlinse auf und wird vorzugsweise als Mehrstufen-Hologramm strukturiert, im vorliegenden Beispiel als transmittive Struktur. Das schließt auch den einfachsten Fall eines 2-Stufen Hologramms ein, das einem binären Phasengitter entspricht, welches einen Phasenhub von ca. 180° und eine lokale Stegbreite in der Größenordnung der halben lokalen Gitterkonstante $d_M$ aufweist.

Mit der Zahl der Stufen eines derartigen Mehrstufen-Hologramms steigt die Beugungseffizienz und damit die erzielbare Signalstärke an. Da aber auch der Herstellungsaufwand zunimmt, stellt ein 4-Stufen-Hologramm einen guten Kompromiss dar. Grundsätzlich ist auch ein kontinuierlicher Reliefverlauf möglich, wenn entsprechende Herstellungsmethoden wie z.B. Prägen zur Verfügung stehen.

Die Teilungsstruktur der Ringlinse der ersten Abtastteilung 24 wird durch eine Phasenfunktion $\Phi_{A1}(r)$ definiert,

die die Phasenverschiebung der austretenden ersten Beugungsordnung als Funktion des Abstandes r zur optischen Achse Z bei kollimierter Beleuchtung beschreibt. Im Fall der Ausbildung der Ringlinse als Mehrstufen-Hologramm wird die Phasenfunktion $\Phi_{A1}(r)$ durch eine Treppenfunktion approximiert, wobei jede Treppenstufe dieser Funktion einer Reliefhöhe entspricht. Die implizite Bedingung, dass die Phasenfunktion $\Phi_{A1}(r)$ nur vom Radius r abhängt, stellt die Zylindersymmetrie dieser diffraktiven Ringlinse sicher.

Für die optimale Wahl der Phasenfunktion $\Phi_{A1}(r)$ können beispielsweise numerische Optimierungsmethoden verwendet werden. Dazu wird zunächst die Phasenfunktion $\Phi_{A1}(r)$ mithilfe von Optimierungsparametern $a_n$ (n=1, 2,... N) beschrieben. Ein Polynomansatz ergibt beispielsweise

$$\phi_{A1}(r) = \sum_{n=1}^{N} a_n \cdot r^n. \qquad \text{(Gl. 1)}$$

Idealerweise müsste aus der diffraktiven Ringlinse jeweils ein Teilstrahlenbündel mit einer idealen Wellenfront austreten, das einen beugungsbegrenzten Fokus auf der Rückseite der Abtastplatte 23 erzeugt. Eine solche ideale Wellenfront $\Phi_{ideal}(x,y)$ ist durch

$$\phi_{ideal}(x,y) = \frac{2\pi}{\lambda} \cdot n_G \cdot \left( \sqrt{(x - x_F)^2 + (y - y_F)^2 + D_G{}^2} - D_G \right) \qquad \text{(Gl. 2)}$$

mit

$n_G :=$ Brechungsindex der Abtastplatte
$(x_F,y_F) :=$ gewünschter lateraler Fokusort
$D_G :=$ Dicke der Abtastplatte

gegeben.

Der gewünschte laterale Fokusort $(x_F,y_F)$ ist bei diesem Ausführungsbeispiel identisch mit dem Auftreffpunkt des Hauptstrahls des jeweiligen Teilstrahlenbündels auf die erste Abtastteilung 24. Für die Optimierung kann das Koordinatensystem ohne Beschränkung so gewählt werden, dass die Messteilung 11 in x-Richtung ablenkt und somit gilt

$$(x_F, y_F) = (r_0, 0). \qquad \text{(Gl. 3)}$$

Der Radius $r_0$ bezeichnet hierbei den radialen Abstand des auf die diffraktive Ringlinse treffenden Hauptstrahls und ist durch die Beugung an der Messteilung folgendermaßen gegeben

$$r_0 = \frac{\lambda/d_M}{\sqrt{1 - (\lambda/d_M)^2}} \cdot D_A, \qquad \text{(Gl. 4)}$$

mit
$D_A :=$ Abtastabstand.

Die Wellenfrontaberration $\delta\Phi_{A1}(x,y)$ der aus der diffraktiven Ringlinse austretenden Wellenfront im Vergleich zur idealen Wellenfront $\Phi_{ideal}(x,y)$ ergibt sich dann zu

$$\delta\phi_{A1}(x,y) = \frac{2\pi}{d_M} \cdot x + \phi_{A1}\left( \sqrt{x^2 + y^2} \right) - \phi_{ideal}(x,y). \qquad \text{(Gl. 5)}$$

Der erste Term in Gl. 5 gibt hierbei die Wellenfront des einfallenden Teilstrahlenbündels nach der Beugung an der Messteilung 11 wider. Durch eine geeignete Wahl der Optimierungsparameter $a_1$, $a_2$,...$a_N$ soll diese Wellenfrontaberration im Umfeld des Strahlmittelpunkts $(r_0,0)$ minimiert werden:

$$|\delta\phi_{A1}(r_0 + \Delta x, \Delta y)|^2 \rightarrow Min \qquad (Gl. 6)$$

Eine solche numerische Optimierung ist für den Fachmann leicht möglich. Die Optimierung lässt sich mit zusätzlichen Forderungen verfeinern. So kann beispielsweise eine gleichzeitige Minimierung von Wellenfrontaberrationen bei bestimmten Toleranzen der optischen Positionsmesseinrichtung eingebracht werden.

Neben der skizzierten numerischen Optimierung gibt es aber auch eine sehr gute und einfache analytische Lösung für die oben beschriebene Optimierung, wenn folgende zusätzliche Bedingung eingehalten wird:

$$D_G = \frac{d_M \cdot n_G \cdot r_0}{\lambda} \qquad (Gl. 7)$$

Unter dieser Bedingung lautet eine optimale Lösung

$$a_2 = -\frac{\pi}{d_M \cdot r_0}, \ a_n = 0 \ (für \ alle \ n \neq 2). \qquad (Gl. 8)$$

Zusammen mit Gl. 1 ergibt sich damit die optimierte Phasenfunktion der diffraktiven Ringlinse:

$$\phi_{A1}(r) = -\frac{\pi}{d_M \cdot r_0} \cdot r^2 \qquad (Gl. 9)$$

Die Wellenfrontaberration nach Gl. 5 ergibt sich zu:

$$\delta\phi_{A1}(r_0 + \Delta x, \Delta y) = -\frac{\pi}{d_M \cdot r_0} \cdot (\Delta x^2 + \Delta y^2) - \frac{2\pi}{\lambda} \cdot n_G \cdot \sqrt{\Delta x^2 + \Delta y^2 + D_G{}^2}$$

$$(Gl. 10)$$

Entwickelt als Polynom in $\Delta x$ und $\Delta y$ ergibt sich in niedrigster Polynomordnung:

$$\delta\phi_{A1}(r_0 + \Delta x, \Delta y) \approx +\frac{\pi \cdot n_G}{4 \cdot \lambda \cdot D_G{}^3} \cdot (\Delta x^2 + \Delta y^2)^2. \qquad (Gl. 11)$$

Gl. 9 bedeutet, dass alle Polynomordnungen dritten Grades, wie z.B. Koma-Aberrationen, eliminiert sind. Erst Polynomordnungen vierten Grades entstehen, wie z.B. sphärische Aberration. Die verbleibende geringe Wellenfrontaberration dieser Lösung führt nach der zweiten Beugung an der diffraktiven Ringlinse wieder zu sehr gut kollimierten Teilstrahlenbündeln, die nach der zweiten Beugung an der Messteilung 11 bzw. Maßverkörperung 10 fast ideal überlagert werden und damit besonders große Abtastsignale liefern. Auf diese Weise werden auch die Anbau-, Betriebs- und Fertigungstoleranzen maximiert.

Setzt man in Gl. 7 und 8 die Gl. 4 ein, so ergibt sich

$$D_G = \frac{n_G \cdot D_A}{\sqrt{1-(\lambda/d_M)^2}} \ , \ a_2 = -\frac{\pi \cdot \sqrt{1-(\lambda/d_M)^2}}{\lambda \cdot D_A}. \qquad \text{(Gl. 12)}$$

Da in den meisten Fällen die Teilungsperiode $d_M$ der Messteilung 11 deutlich größer ist als die Wellenlänge $\lambda$, hängen die beiden Parameter $D_G$ und $a_2$ kaum von der Teilungsperiode $d_M$ ab. Das bedeutet, dass mit einer solchen Abtastoptik durchaus Messteilungen 11 mit unterschiedlichen Teilungsperioden $d_M$ abtastbar sind. Zusammen mit der sehr großen Moiré-Kipptoleranz ergeben sich dadurch weitere Anwendungsmöglichkeiten, wie nachfolgend noch erläutert wird.

Eine schematisierte Draufsicht auf das Reflektorelement 25 bzw. die zweite Abtastteilung auf der Rückseite der Abtastplatte 23 zeigt Figur 2b. Die zweite Abtastteilung ist im vorliegenden Beispiel wie die erste Abtastteilung 24 ringförmig ausgebildet; jedoch ist als zweite Abtastteilung ein reflektierendes Hochfrequenzgitter mit einer lokalen Gitterkonstante von vorzugsweise kleiner als $\lambda/n_G$ vorgesehen. Derart ist gewährleistet, dass bei nahezu senkrechtem Einfall der beiden Teilstrahlenbündel auf die zweite Abtastteilung nur eine nullte Beugungsordnung entstehen kann. Das Hochfrequenzgitter wirkt damit auf die darauf einfallenden Teilstrahlenbündel zunächst als Spiegel. Die Gitterstruktur dieses Hochfrequenzgitters wird nunmehr so gewählt, dass unterschiedliche Polarisationseigenschaften der davon reflektierten Teilstrahlenbündel abhängig von der lokalen Gitterrichtung oder Gitterausbildung, wie Steghöhe und Stegbreite, entstehen. Dadurch ist es möglich, mit einer ortsabhängigen Variation dieser Gitterparameter die Polarisationseigenschaften ebenfalls ortsabhängig zu machen. In der dargestellten Ausführungsform sind gemäß Figur 2b zwei Hälften eines kreisringförmigen Hochfrequenzgitters mit zueinander senkrechten Gitterrichtungen vorgesehen. Die Gitterstege sind als metallische Stege ausgebildet und wirken als lineare Polarisatoren. Nur die Polarisationsrichtung parallel zu den Gitterstegen wird jeweils reflektiert. Die beiden Teilstrahlenbündel treffen, wie in Figur 2b angedeutet, auf jeweils einer der beiden Hälften des Hochfrequenzgitters. Da die Polarisationsrichtung des einfallenden Strahlenbündels unter 45° zu beiden Gitterrichtungen gewählt ist, werden die beiden Teilstrahlenbündel auf diese Art und Weise orthogonal zueinander polarisiert. Das Hochfrequenzgitter des Reflektorelements 25 bzw. das Reflektorelement 25 fungiert in diesem Beispiel demzufolge als polarisationsoptisches Bauelement.

Die Detektionseinheit 26 des ersten Ausführungsbeispiels ist in Abb. 3 schematisiert dargestellt. Das von links darauf einfallende, überlagerte Strahlenbündel trifft zunächst auf eine $\lambda/4$-Verzögerungsplatte 26.1, die die lineare Polarisation der beiden orthogonal polarisierten Teilstrahlenbündel in eine rechts- bzw. linkszirkulare Polarisation verwandelt. Ein nachfolgender Strahlteiler 26.2, ausgebildet als Gitterstrahlteiler, spaltet das überlagerte Strahlenbündel in 0. und +/-1. Beugungsordnung räumlich in drei überlagerte Teilstrahlenbündel auf. Diese durchlaufen anschließend drei Polarisatoren 26.3a, 26.3b, 26.3c und treffen schließlich auf drei Detektorelemente 26.4a, 26.4b, 26.4c. Die Detektorelemente 26.4a, 26.4b, 26.4c liefern die Abtastsignale $S_0$, $S_{-120}$, und $S_{+120}$. Durch das Verdrehen der drei Polarisatoren 26.3a, 26.3b, 26.3c gegeneinander um jeweils 60° erreicht man eine gegenseitige Phasenverschiebung der Abtastsignale $S_0$, $S_{-120}$, und $S_{+120}$ um jeweils 120°. Die weitere Verarbeitung der phasenverschobenen Abtastsignale $S_0$, $S_{-120}$, und $S_{+120}$ in einer geeigneten Folgeelektronik erfolgt dann in bekannter Art und Weise.

Die Moire-Kipptoleranz dieser Ausführungsform der erfindungsgemäßen optischen Positionsmesseinrichtung wird durch das Reflektorelement 25 bzw. die hierzu vorgesehene zweite Abtastteilung begrenzt. Da der Fokus der beiden Teilstrahlenbündel jeweils auf einer Hälfte des Hochfrequenzgitters bleiben muss, um nach der Reflexion stets eine definierte lineare und zueinander orthogonale Polarisation zu gewährleisten, ist eine Moire-Kipptoleranz von beinahe +/-90° erreichbar. Die zweite Abtastteilung verhält sich abgesehen von der polarisierenden Wirkung wie ein Spiegel. Wenn man unter der Strahlgeometrie der Abtastoptik lediglich die Lage und Richtung des Strahlverlaufs nicht aber den Polarisationszustand der Teilstrahlenbündel versteht, dann ist die Strahlgeometrie der vorliegenden Abtastoptik von der Aufspaltung der beiden Teilstrahlenbündel bis zu deren Überlagerung völlig zylindersymmetrisch.

### Zweite Ausführungsform

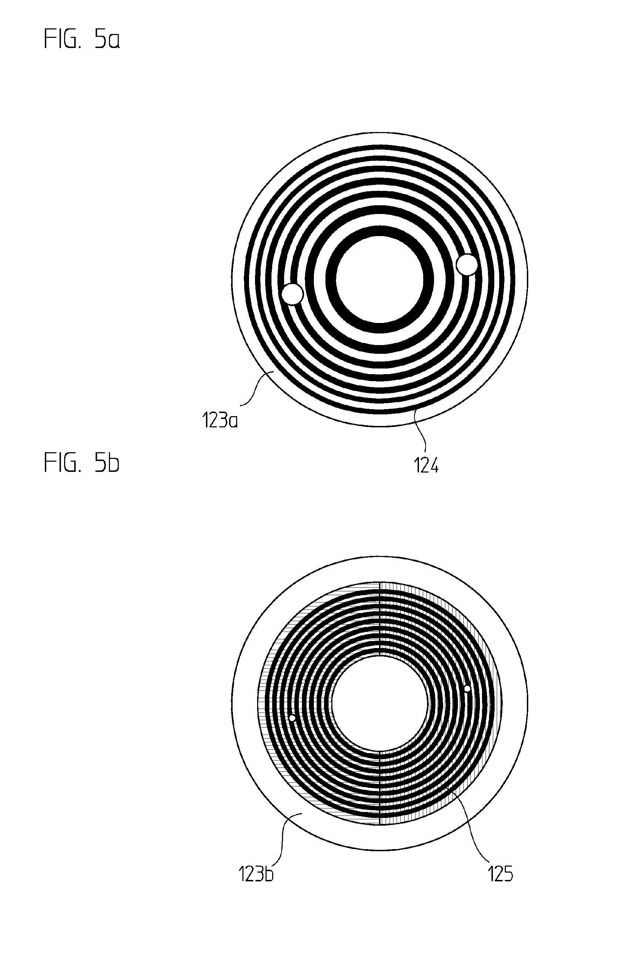

Anhand der Figuren 4, 5a, 5b und 6 wird nachfolgend eine zweite Ausführungsform der erfindungsgemäßen optischen Positionsmesseinrichtung erläutert; eingegangen wird hierbei lediglich auf die maßgeblichen Unterschiede zum ersten Ausführungsbeispiel.

Die erste Abtastteilung 124 ist in dieser Variante der erfindungsgemäßen optischen Positionsmesseinrichtung als transmittive, diffraktive Ringlinse ausgebildet, die nunmehr jedoch eine radiale Ablenkung der nach dem ersten Durchlauf austretenden Teilstrahlenbündel um einen Winkel $\alpha$ gegenüber der Normalenrichtung bewirkt. Die Foki der beiden Teilstrahlenbündel liegen erneut auf dem Reflektorelement 125, das wiederum als zweite Abtastteilung ausgebildet ist. Durch den Winkel $\alpha$ ist der radiale Abstand $r_1$ der Foki von der optischen Achse Z nicht identisch mit dem radialen Abstand $r_0$ der Teilstrahlenbündel auf der ersten Abtastteilung 124. Die zweite Abtastteilung muss deshalb zusätzlich zur orthogonalen Polarisation eine radiale Ablenkung der Teilstrahlenbündel bewirken, damit sie wieder entgegengesetzt zurücklaufen. Diese zusätzliche radiale Ablenkung wird dadurch erreicht, dass das Hochfrequenzgitter der zweiten Abtastteilung eine überlagerte Zirkulargitterstruktur mit kreisförmigen Stegen trägt. Die radiale Gitterkonstante $d_R$ des Zirkulargitters wird hierzu folgendermaßen gewählt:

$$d_R = \frac{\lambda}{2 \cdot \sin(\alpha)} \qquad \text{(Gl. 13)}$$

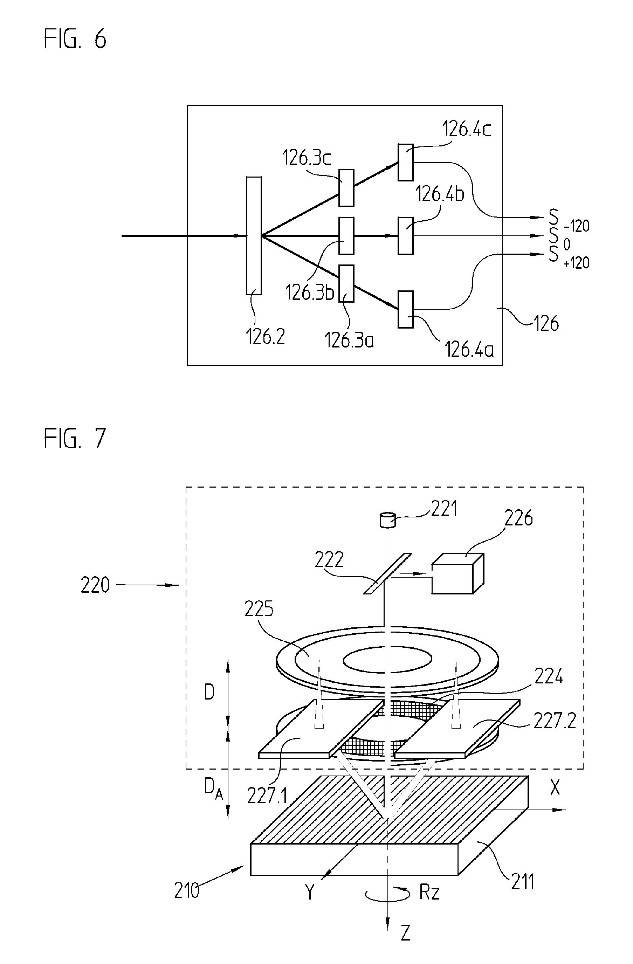

Darüber hinaus ist das Hochfrequenzgitter in der zweiten Abtastteilung der der vorliegenden Ausführungsform der erfindungsgemäßen optischen Positionsmesseinrichtung so ausgebildet, dass es lokal wie eine $\lambda/4$-Verzögerungsplatte wirkt, deren Ausrichtung durch die lokale Gitterrichtung des Hochfrequenzgitters gegeben ist. Diese Ausrichtung wird wie im ersten Ausführungsbeispiel in den beiden Hälften des zweiten Abtastgitters orthogonal zueinander gewählt, so dass die einfallenden Teilstrahlenbündel, die wie das Beleuchtungsstrahlenbündel unter 45° zu beiden Gitterrichtungen linear polarisiert sind, in ein linkszirkular bzw. ein rechtszirkular polarisiertes Teilstrahlenbündel verwandelt werden.
Das Hochfrequenzgitter ist vorzugsweise aus einem hochbrechenden dielektrischen Material aufgebaut, das von einer flächigen Interferenzspiegelschicht oder einem flächigen Metallspiegel überdeckt wird. Eine beispielhafte Beschreibung eines geeigneten Hochfrequenzgitters findet sich beispielsweise in der Veröffentlichung Wanji Yu et al., Reduced wavelengthdependent quarter-wave plate fabricated by a multilayered subwavelength structure, Appl. Optics, Vol. 45, No. 12, p. 2601ff, 2006.
Da das Hochfrequenzgitter hier nicht als Polarisator wirkt, der eine Polarisationsrichtung absorbiert oder transmittiert, sondern als Verzögerungsplatte, wird die reflektierte Lichtintensität und damit auch die Signalstärke erhöht.
In der Detektionseinheit 126, die in Figur 6 dargestellt ist, kann in diesem Beispiel die eingangsseitige $\lambda/4$-Verzögerungsplatte aus dem vorherigen Ausführungsbeispiel entfallen, da die beiden Teilstrahlenbündel bereits orthogonal zirkular polarisiert sind. Ansonsten entspricht der Aufbau der Detektionseinheit 126 demjenigen des ersten Ausführungsbeispiels.
Im vorliegenden zweiten Ausführungsbeispiel sind die beiden Abtastgitter getrennt auf zwei separaten Abtastplatten 123a, 123b aufgebracht und durch einen Luftspalt getrennt. Dieser Luftspalt wird bei der Montage der Positionsmesseinrichtung so eingestellt, dass maximale Signalstärken resultieren. Auf diese Weise lassen sich Bauteiltoleranzen, wie z.B. die Wellenlängenvariation der Lichtquelle ausgleichen.
Die Strahlgeometrie der Abtastoptik des zweiten Ausführungsbeispiels ist von der Aufspaltung der beiden Teilstrahlenbündel bis zu deren Überlagerung wieder zylindersymmetrisch. Die erzielbare Moire-Kipptoleranz beträgt wieder beinahe +/-90°.

### Dritte Ausführungsform

In Figur 7 ist analog zu den vorherigen Darstellungen eine dritte Ausführungsform der erfindungsgemäßen optischen Positionsmesseinrichtung gezeigt.
Wiederum ist vorgesehen, die erste Abtastteilung 224 als transmittive, diffraktive Ringlinse auszubilden. Die beim ersten Durchgang durch die Ringlinse austretenden Teilstrahlenbündel werden wie im ersten Ausführungsbeispiel parallel zur optischen Achse Z gelenkt ($\alpha$=0). Sie durchtreten nachfolgend jeweils eine $\lambda/8$-Verzögerungsplatte 227.1, 227.2 bevor sie auf das Reflektorelement 225 treffen, das vorliegend als Spiegel ausgebildet ist. Die Kombination aus den $\lambda/8$-Verzögerungsplatte, 227.1, 227.2 und dem Spiegel ersetzt in dieser Ausführungsform der erfindungsgemäßen optischen Positionsmesseinrichtung die zweite Abtastteilung aus den ersten beiden Ausführungsbeispielen.
Die lineare Polarisation des von der Lichtquelle 221 emittierten Strahlbündels und die beiden $\lambda/8$-Verzögerungsplatten 227.1, 227.2 werden so zueinander ausgerichtet, dass die beiden Teilstrahlenbündel nach dem zweimaligen Durchtritt durch die $\lambda/8$-Verzögerungsplatten 227.1, 227.2 eine linkszirkulare bzw. rechtszirkulare Polarisation aufweisen und damit zueinander orthogonal polarisiert sind. Die Detektionseinheit 226 ist wie im zweiten Ausführungsbeispiel gemäß Figur 6 ausgebildet.
Diese Ausführungsform der erfindungsgemäßen Positionsmesseinrichtung ist insbesondere dann vorteilhaft, wenn keine Möglichkeit zur Herstellung von komplexen Hochfrequenzgittern für das zweite Abtastgitter zur Verfügung steht, um derart die Polarisationsrichtungen geeignet einzustellen. Stattdessen werden zur gewünschten Ausrichtung der Polarisationsrichtungen in den beiden Teilstrahlenbündeln handelsübliche $\lambda/8$-Verzögerungsplatten 227.1, 227.2 verwendet, die z.B. aus Quarz-Kristallen bestellen. In diesem Ausführungsbeispiel fungieren somit die Verzögerungsplatten 227.1, 227.2 als polarisationsoptische Bauelemente, um in den aufgespaltenen Teilstrahlengängen die Polarisationsrichtungen geeignet einzustellen. Alternativ zur Anordnung der Verzögerungsplatten 227.1, 227.2 zwischen der ersten Abtastteilung 224 und dem Reflektorelement 225 könnte auch vorgesehen werden, die Verzögerungsplatten 227.1, 227.2 zwischen der Messteilung 211 und der ersten Abtastteilung 224 im Strahlengang der aufgespaltenen Teilstrahlenbündel anzuordnen.

**Vierte Ausführungsform**

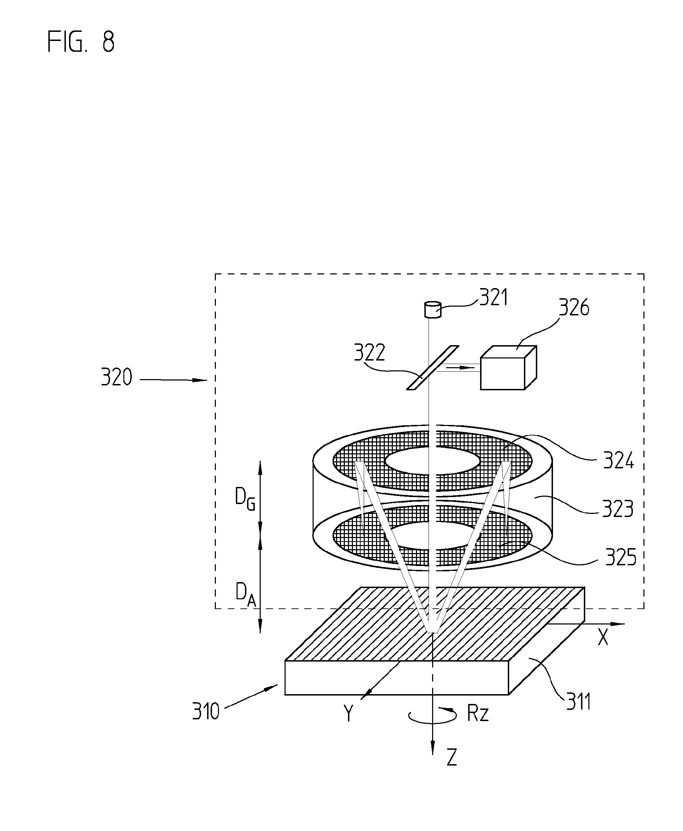

Eine viertes Ausführungsbeispiel der erfindungsgemäßen optischen Positionsmesseinrichtung ist in den Figuren 8, 9a, 9b und 10 dargestellt.

In dieser Variante ist im Unterschied zu den vorher erläuterten Beispielen die erste Abtastteilung 224 auf der Rückseite der Abtastplatte 223 und das Reflektorelement 225 bzw. die zweite Abtastteilung auf der Vorderseite der Abtastplatte 223 aufgebracht. Sowohl die erste Abtastteilung 224 als auch die Abtastteilung des Reflektorelements 225 werden hierbei in Reflexion genutzt. Dadurch sind diese Abtastteilungen besonders gut vor einer Verschmutzung, wie z.B. Fingerabdrücken oder Wasserkondensation, geschützt. Auf diese Art und Weise erhöht sich die Verschmutzungsunempfindlichkeit der Positionsmesseinrichtung beträchtlich.

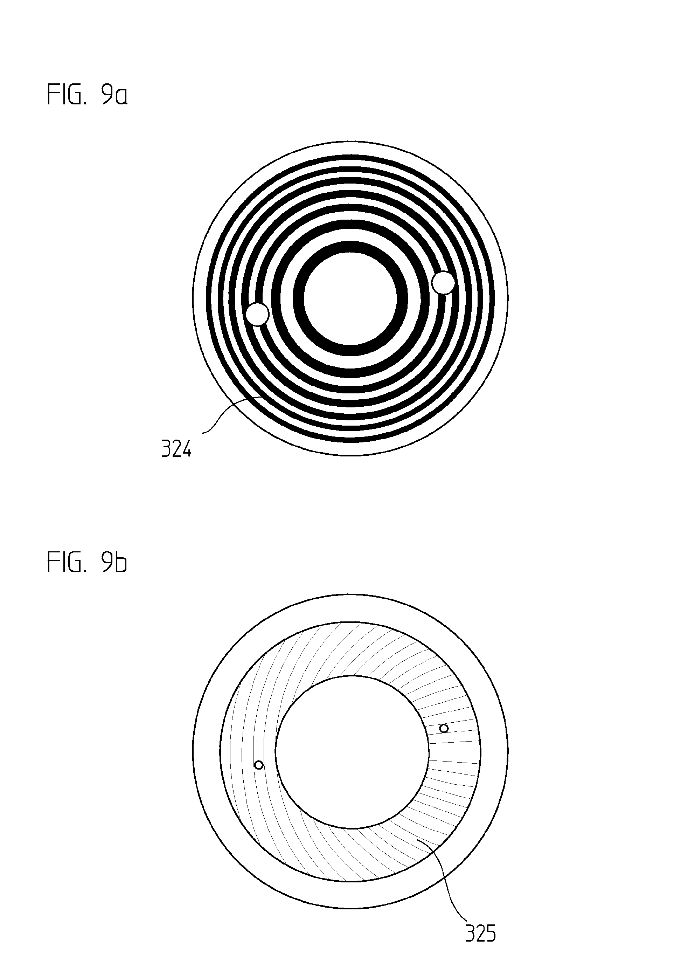

Das kollimierte Beleuchtungsstrahlenbündel der Lichtquelle 321 wird hier mittels einer nicht dargestellten $\lambda/4$-Verzögerungsplatte zirkular polarisiert und durchtritt zunächst den Strahlteiler 322 und sodann den inneren Fensterbereich der Abtastplatte 223. Anschließend wird das Strahlenbündel von der Messteilung 311 auf der Maßverkörperung 310 in +/-1. Beugungsordnung in zwei Teilstrahlenbündel aufgespalten. Die beiden von der Messteilung 311 reflektierten Teilstrahlenbündel gelangen daraufhin über den inneren Fensterbereich der Vorderseite der Abtastplatte 323 auf die reflektierende erste Abtastteilung 324 auf der Rückseite der Abtastplatte 323. Die erste Abtastteilung 324, die in Figur 9a in einer Draufsicht gezeigt ist, ist hierbei wieder als diffraktive Ringlinse ausgebildet. Nach der Beugung über die erste Abtastteilung 324 werden die beiden Teilstrahlenbündel parallel zur optischen Achse Z auf das Reflektorelement 325 bzw. die ebenfalls reflektierende zweite Abtastteilung auf der Vorderseite der Abtastplatte 323 fokussiert. Die ringförmige zweite Abtastteilung, welche in Figur 9b gezeigt ist, ist hier wieder als reflektierendes metallisches Hochfrequenzgitter ausgeführt. Durch die polarisierende Wirkung des Hochfrequenzgitters weisen die in 0. Beugungsordnung reflektierten Teilstrahlenbündel jeweils eine lineare Polarisation auf. Ihre Ausrichtung ist wieder durch die lokale Stegrichtung des Hochfrequenzgitters bestimmt. Wie aus Figur 9b ersichtlich dreht sich die lokale Stegrichtung entlang der azimutalen Ausdehnung kontinuierlich um 180°. Die zugrunde gelegte Gitterphase $\Phi_P(x,y)$ kann nach der folgenden Beziehung gebildet werden:

$$\phi_P(x,y) = \frac{2\pi}{d_P} \cdot \left( r_1 + \sqrt{x^2 + y^2} \right) \cdot \sin\left( \frac{\text{arctan2}(y,x)}{2} \right), \quad \text{(Gl. 14)}$$

mit

r₁=r₀:=    Radius der Foki beider Teilstrahlenbündel auf der zweiten Abtastteilung
d_P:=    lokale Gitterkonstante des Hochfrequenzgitters
arctan2:=    fortgesetzte arctan-Funktion

Die lokalen Stegrichtungen an diametral gegenüberliegenden Stellen sind dabei - zumindest am Radius $r_1$ - zueinander orthogonal. Da die beiden Teilstrahlenbündel bei einer beliebigen Moiré-Kippung Rz der Maßverkörperung 310 genau an solchen diametralen Orten auftreffen, werden sie stets orthogonal zueinander polarisiert. Allerdings dreht sich bei einer Moire-Kippung Rz die Polarisation beider Teilstrahlenbündel um den halben Winkel mit, so dass eine besondere Detektionseinheit 326 zur Erzeugung geeigneter Abtastsignale erforderlich ist.

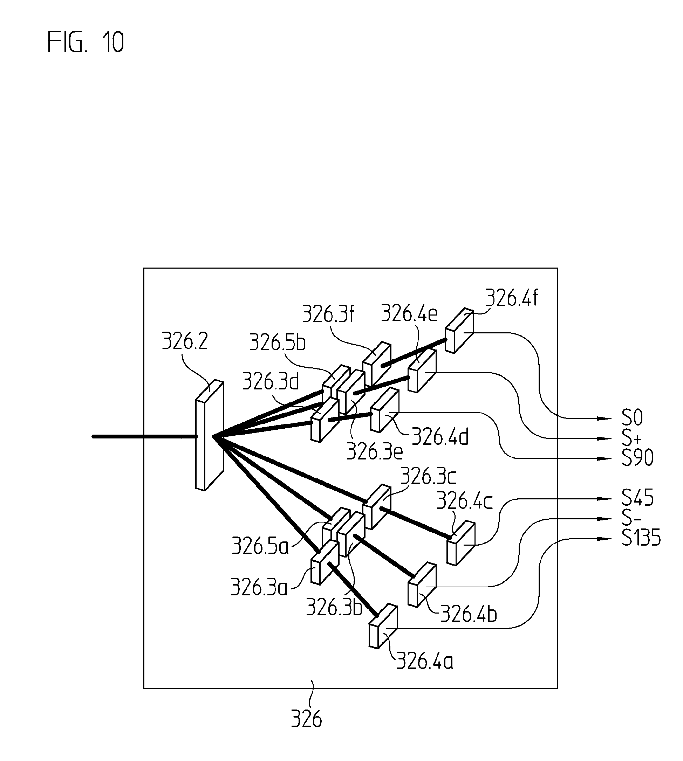

Der prinzipielle Aufbau einer derartigen Detektionseinheit ist in Figur 10 schematisiert dargestellt. In dieser Ausführungsform der erfindungsgemäßen Positionsmesseinrichtung wird in der Detektionseinheit 326 nunmehr ein Kreuzgitter 326.2 zur Aufspaltung des einfallenden überlagerten Strahlenbündels auf sechs überlagerte Teilstrahlenbündel verwendet. Jedes dieser überlagerten Teilstrahlenbündel durchläuft einen Polarisator 326.3a - 326.3f bevor es auf ein Detektorelement 326.4a - 326.4f trifft und in ein Abtastsignal gewandelt wird. Bei zweien der überlagerten Teilstrahlenbündel ist zudem eine $\lambda/4$-Verzögerungsplatte 326.5a, 326.5b vor dem Polarisator 326.3b, 326.3e eingefügt. Im Verlauf der weiteren Beschreibung wird die Poincaré-Darstellung eines Polarisationszustandes verwendet, die beispielsweise im Fachbuch M. Born, E. Wolf: Principles of Optics, Cambridge University Press, 1999; S. 32, 33 beschrieben ist. Die Orientierungen der Polarisatoren 326.3b, 326.3e und der $\lambda/4$-Verzögerungsplatten 326.5a, 326.5b sind so gewählt, dass in der Poincaré-Darstellung des Polarisationszustandes des überlagerten Strahlenbündels folgende Zustände durch die Detektorelemente 326.4a - 326.4f detektiert werden:

lineare Polarisationen: S0: 0°, S45: 45°, S90: 90°, S135:135°;

zirkulare Polarisationen: S+: linkszirkular, S- rechtszirkular.

Auf diese Weise kann jeder Polarisationszustand des überlagerten Strahlenbündels detektiert werden, was in der Poincaré-Darstellung einer exakten Lokalisierung auf der Poincaré-Kugel entspricht.

Durch eine geeignete Auswertung der sechs Abtastsignale lässt sich bei jedem Moiré-Kippwinkel Rz die Positionsphase bestimmen. Diese Ausführungsform lässt sich daher ohne Begrenzung der Moiré-Kippung Rz betreiben. Allerdings ist bei der Inbetriebnahme dieser Variante der erfindungsgemäßen optischen Positionsmesseinrichtung eine Zweideutigkeit in der Messrichtung x zu klären. Da die positive und negative Beugungsrichtung der Messteilung 310 nicht unterscheidbar sind, muss das Vorzeichen der Messrichtung x aufgrund zusätzlicher Informationen festgelegt werden. Dazu können etwa zusätzliche Signale erzeugt oder aus anderen Quellen geeignete Informationen ausgewertet werden. Nach der Inbetriebnahme wird die ausgewählte Messrichtung x auch bei einer beliebigen Moiré-Kippung Rz beibehalten.

**Fünfte Ausführungsform**

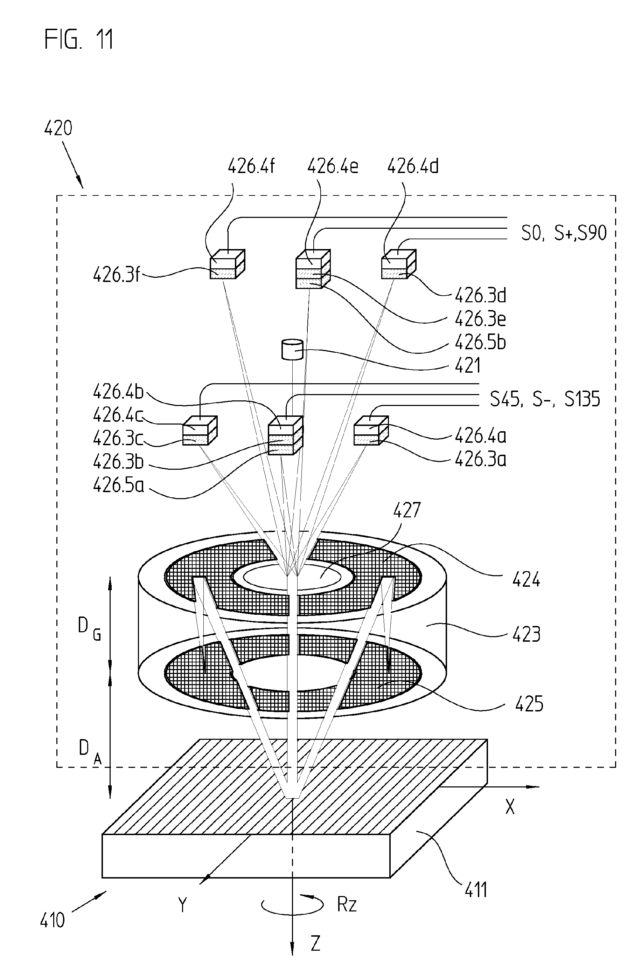

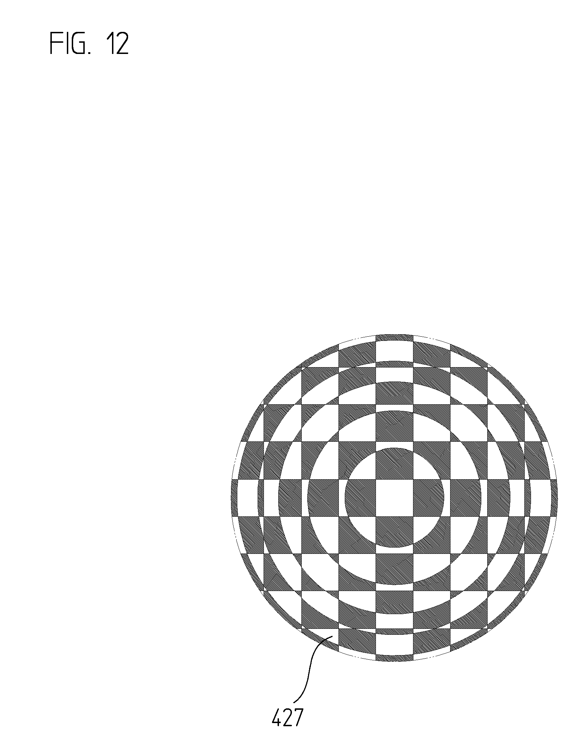

Das fünfte Ausführungsbeispiel der erfindungsgemäßen optischen Positionsmesseinrichtung entspricht weitgehend der vorhergehend erläuterten vierten Ausführungsform und ist in den Figuren 11 und 12 dargestellt.

Zur Kollimation des von der Lichtquelle 421 emittierten Strahlenbündels wird nunmehr eine diffraktive Struktur 427 mit einer Linsenfunktion verwendet. Die Struktur 427 ist hierbei in dem Bereich auf der Oberseite der Abtastplatte 423 angeordnet, den das von der Lichtquelle 421 emittierte Strahlenbündel durchläuft. Konkret ist in diesem Beispiel die Struktur 427 innerhalb der diffraktiven Ringlinse der ersten Abtastteilung 424 auf der Oberseite der Abtastplatte 423 eingefügt. Die diffraktive Struktur 427 kollimiert das divergent einfallende Strahlenbündel der Lichtquelle 421.

Ferner wird über die diffraktive Struktur 427 noch eine weitere optische Funktionalität implementiert. So wirkt diese gleichzeitig als Gitterstrahlteiler in Form eines Kreuzgitters und spaltet das von der Messteilung 411 zurücklaufende überlagerte Strahlenbündel in 6 überlagerte Teilstrahlenbündel auf. Schematisch ist die Phasengitterstruktur der diffraktiven Struktur 427 als 2-Stufen-Hologramm in Figur 12 gezeigt. Man kann in dieser Darstellung die ringförmige Fresnellinse erkennen, die überlagert ist mit einer schachbrettförmigen Feldanordnung, in denen die lokale Struktur der Fresnellinse invertiert ist. Die nach der zweiten Beugung an der Messteilung 411 überlagerten Teilstrahlenbündel, die entlang der optischen Achse Z austreten, werden durch die diffraktive Struktur 427 in sechs überlagerte Teilstrahlenbündel aufgespalten und gleichzeitig fokussiert. Dadurch können kleinere Detektorelemente 426.4a - 426.4f verwendet werden, was wiederum einen kompakten Aufbau ermöglicht. Zudem werden die überlagerten Teilstrahlenbündel von der optischen Achse Z abgelenkt und damit vom beleuchtenden Strahlenbündel der Lichtquelle 421 getrennt. Die diffraktive Struktur 427 dient daher auch als Strahlteiler.

Wie im vierten Ausführungsbeispiel dienen polarisationsoptische Bauelemente in Form von Polarisatoren 426.3a - 426.3f und λ/4-Verzögerungsplatten 426.5a, 426.5b vor den Detektorelementen 426.4a - 426.4f zur Erzeugung der Abtastsignale S0, S45, S90, S135, S+ und S-.

Die fünfte Ausführungsform der erfindungsgemäßen optischen Positionsmesseinrichtung ermöglicht gegenüber der vierten Ausführungsform eine deutlich kompaktere Bauweise. Alternativ können statt der kombinierten diffraktiven Struktur 427 für die Kollimation und die Strahlteilung natürlich auch getrennte, diffraktive Bauelemente für die Kollimationslinse und das Aufspaltgitter vorgesehen werden.

**Sechste Ausführungsform**

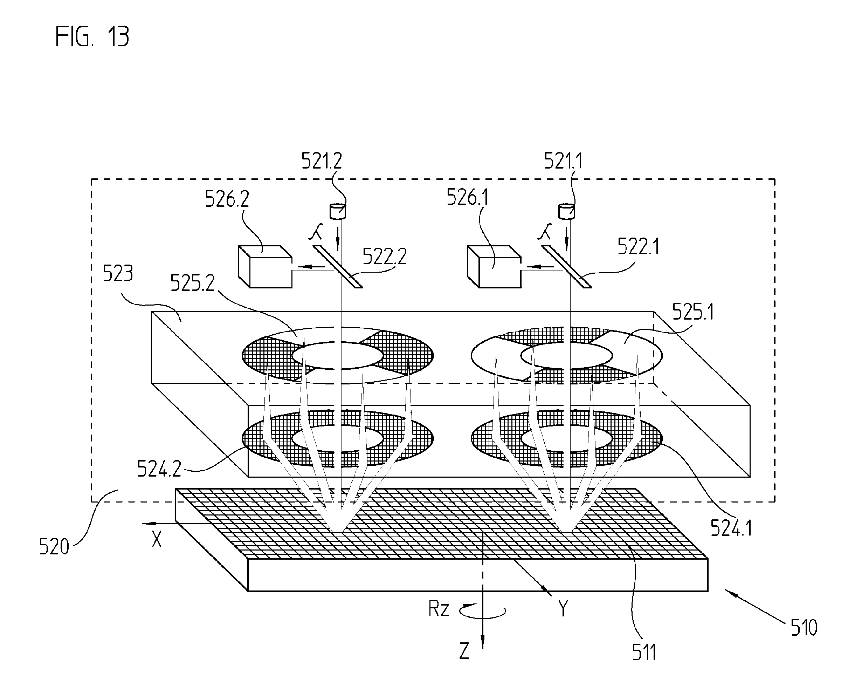

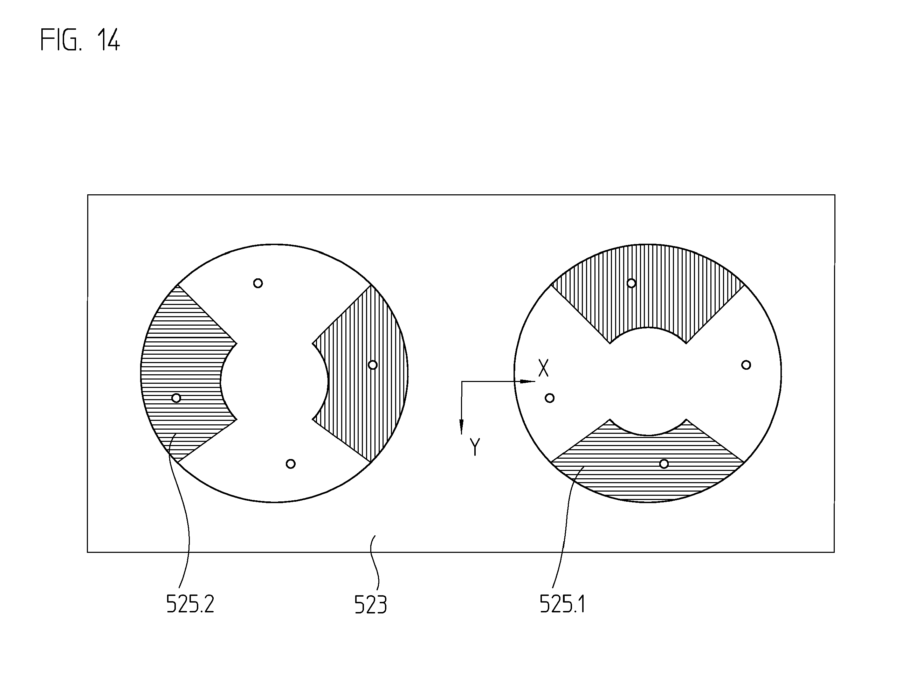

Eine sechste Ausführungsform der erfindungsgemäßen optischen Positionsmesseinrichtung ist in den Figuren 13 und 14 dargestellt.

In dieser Variante ist die Abtastung einer Maßverkörperung 510 vorgesehen, bei der die darauf angeordnete reflektive Messteilung 511 als Kreuzgitter ausgebildet ist, d.h. als zweidimensionale lineare Teilung. Das Kreuzgitter besitzt die gleichen Teilungsperioden in der angegebenen X- und Y-Richtung und kann beispielsweise als Phasengitter mit 180° Phasenhub in einer Schachbrettstruktur ausgebildet sein. Auf Seiten der Abtasteinheit 520 sind zwei nahezu identische Abtastoptiken ähnlich zum erläuterten ersten Ausführungsbeispiel vorgesehen. Die ersten Abtastteilungen 524.1, 524.2 und die Reflektorelemente 525.1, 525.2 sind auf den beiden gegenüberliegenden Seiten einer gemeinsamen Abtastplatte 523 aufgebracht. An jeder Abtaststelle beugt die Messteilung 511 das einfallende Beleuchtungsstrahlenbündel der Lichtquellen 521.1, 521.2 in jeweils vier erste Beugungsordnungen, die mit zwei Indizes für die X- bzw. Y-Richtung bezeichnet werden: (1,0), (-1,0), (0,1), (0,-1). Alle vier ersten Beugungsordnungen werden jeweils durch das als diffraktive Ringlinse ausgebildete erste Abtastgitter 524.1, 524.2 auf der Vorderseite der Abtastplatte 523 auf die Rückseite der Abtastplatte 523 fokussiert. Im Gegensatz zur ersten Ausführungsform sind die als zweite Abtastteilungen ausgebildeten Reflektorelemente 525.1, 525.2 sektorenförmig begrenzt. Wie in Figur 14 dargestellt, sind jeder Abtaststelle zwei diametral gegenüberliegende Sektoren des jeweiligen Reflektorelements 525.1, 5252.2 zugeordnet, die jeweils ein Hochfrequenzgitter enthalten, dessen Gitterstege wie aus der Figur 14 ersichtlich orthogonal zueinander verlaufen. Bei jeder Abtaststelle werden deshalb nur diejenigen diametralen Teilstrahlenbündel reflektiert, die auf eine der beiden Sektoren treffen. Die Sektoren der beiden Abtaststellen sind zueinander um 90° verdreht, sodass in der ersten Abtaststelle nur die in X-Richtung abgelenkten Beugungsordnungen (1,0) und (-1,0) der Messteilung reflektiert werden und in der zweiten Abtaststelle nur die in Y-Richtung abgelenkten Beugungsordnungen (0,1) und (0,-1). Auf diese Weise wird sichergestellt, dass die erste Abtaststelle nur in X-Richtung und die zweite Abtaststelle nur in Y-Richtung misst. Die Winkelöffnung der Sektoren der zweiten Abtastteilung beträgt maximal 90° und erlaubt eine maximale Moiré-Kipptoleranz von nahezu +/- 45°.

### Siebte Ausführungsform

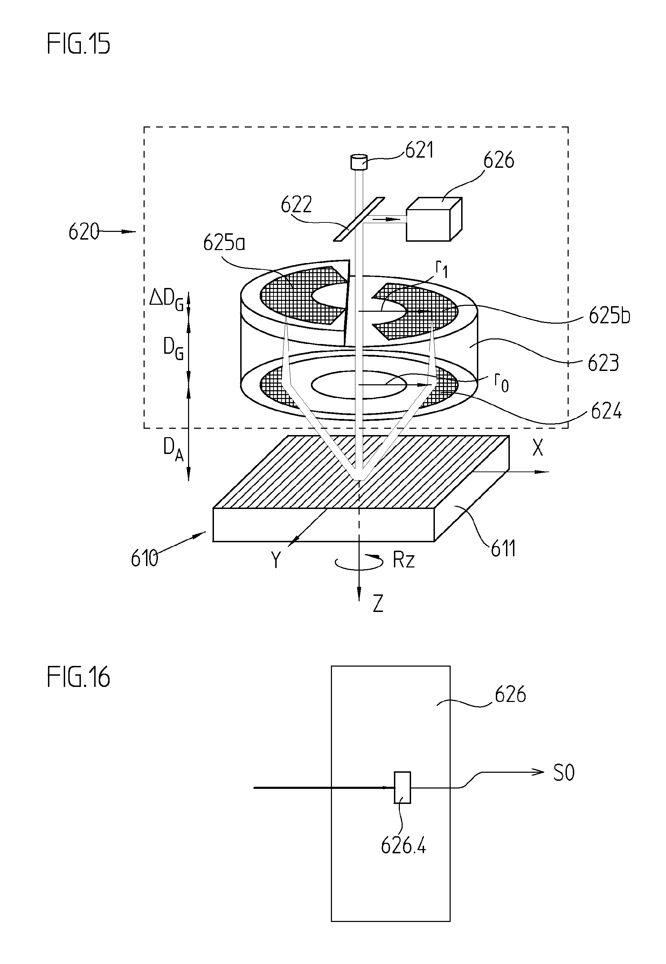

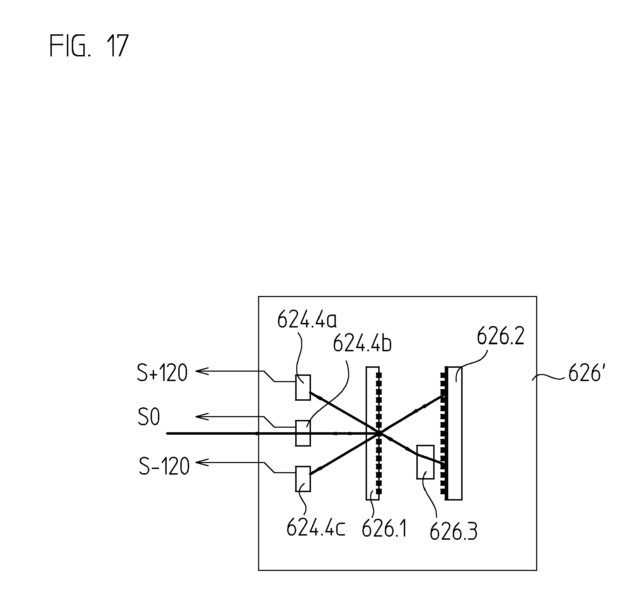

Eine siebte Ausführungsform der erfindungsgemäßen optischen Positionsmesseinrichtung ist in den Figuren 15, 16 dargestellt; Figur 17 zeigt eine Komponente einer ersten Variante dieser Ausführungsform der optischen Positionsmesseinrichtung.

In dieser Ausführungsform wird eine optische Verzögerungsstrecke in den Strahlengang eines der beiden aufgespaltenen Teilstrahlenbündel eingefügt. Wie in Figur 15 gezeigt, sind die beiden Reflektorelemente 625a und 625b für die zwei Teilstrahlenbündel nicht in derselben Ebene angeordnet, sondern entlang der optischen Achse in z-Richtung um einen kleinen Betrag $\Delta D_G$ zueinander verschoben. Entsprechend ist die Abtastteilung 624 in zwei Hälften unterteilt, die jeweils die zugehörigen Teilstrahlenbündel auf die Reflektorelemente 625a bzw. 625b fokussieren. Aufgrund dieser Maßnahmen durchlaufen die beiden Teilstrahlenbündel unterschiedlich lange optische Wege, die sich um den Betrag $n_G \cdot \Delta D_G$ unterscheiden, wobei $n_G$ der Brechungsindex der Abtastplatte 623 ist und $\Delta D_G$ die Dicke der Abtastplatte 623 angibt. Auf diese Art und Weise resultieren Phasenverschiebungen bei der Interferenz der Teilstrahlenbündel, die abhängig von der Wellenlänge der Lichtquelle 621 sind. Eine orthogonale Polarisation der beiden Teilstrahlenbündel ist dabei nicht mehr notwendig.

Die zugehörige Detektionseinheit 626 dieser Ausführungsform ist in Figur 16 in schematisierter Form gezeigt. Sie enthält nur ein Detektorelement 626.4, welches das Abtastsignal S0 erzeugt. Phasenverschobene Abtastsignale, die für die Richtungserkennung in der Positionsmesseinrichtung benötigt werden, erhält man durch die geeignete Modulation der Wellenlänge der Lichtquelle 621. Das Grundprinzip einer derartigen Erzeugung phasenverschobener Abtastsignale ist in der Veröffentlichung von Susumu Makinouchi et al, An evaluation of a modulated laser encoder, Prec. Eng. 35 (2011) 302-308 beschrieben. Die Lichtquelle 621 wird hierbei in der Wellenlänge hochfrequent moduliert, wodurch eine entsprechende Phasenmodulation des Abtastsignals S0 entsteht. Sie wird durch eine nachfolgende, in Figur 16 nicht dargestellte, Auswerteelektronik ausgewertet und liefert die benötigte Information zur Richtungserkennung. Besonders einfach ist die Modulation der Wellenlänge einer Halbleiterlaserdiode, indem dessen Stromquelle moduliert wird. Eine detaillierte Beschreibung der Auswertung des Abtastsignals S0 findet sich in der oben erwähnten Veröffentlichung.

Besonders günstig ist diese Ausführungsform der erfindungsgemäßen optischen Positionsmesseinrichtung, wenn zwischen der Lichtquelle 621, dem Strahlteiler 622 und der Detektionseinheit 626 einerseits und der Abtastplatte 623 andererseits eine - in den Figuren nicht dargestellte - optische Faserverbindung bzw. ein Lichtwellenleiter eingebracht wird. Eine einzige optische Faser kann dabei das Lichtbündel von der Lichtquelle 621 zur Abtastplatte 623 übertragen und gleichzeitig die beiden überlagerten Teilstrahlenbündel von der Abtastplatte 623 zurück zur Detektionseinheit 626. Als optische Faser eignet sich an dieser Stelle sowohl eine Singlemode- als auch eine Multimode-Faser.

Weiterhin ist es vorteilhaft den Strahlteiler 622 als polarisierenden Strahlteiler auszuführen und die lineare Polarisation der Lichtquelle 621 so zu wählen, dass das Strahlenbündel der Lichtquelle 621 ohne Abschwächung vom Strahlteiler 622 transmittiert wird. Dem polarisierenden Strahlteiler 622 im Strahlenverlauf nachgeordnet wird eine - nicht dargestellte - $\lambda/4$-Verzögerungsplatte angeordnet, die eine zirkulare Polarisation der durchlaufenden Strahlenbündel erzeugt. Die zu dieser $\lambda/4$-Verzögerungsplatte von der Abtastplatte 623 zurücklaufenden, überlagerten Teilstrahlenbündel sind entgegengesetzt zirkular polarisiert und werden durch die $\lambda/4$-Verzögerungsplatte in eine lineare Polarisation überführt, die orthogonal zur Polarisation des emittierten Strahlenbündels der Lichtquelle 621 steht. Der polarisierende Strahlteiler 622 reflektiert dieses Strahlenbündel ohne Abschwächung zur Detektionseinheit 626. Dadurch wird die Signalstärke der erfindungsgemäßen optischen Positionsmesseinrichtung optimiert und das Signalrauschen minimiert.

Eine erste Variante der siebten Ausführungsform der erfindungsgemäßen optischen Positionsmesseinrichtung kann basierend auf den aus der WO 2011/000715A1 bekannten Prinzipien ausgebildet werden. Dabei kommt vorzugsweise eine Lichtquelle mit sehr kurzer Kohärenzlänge wie z.B. eine LED oder eine Superlumineszenzdiode zum Einsatz, die nun nicht mehr in der Wellenlänge moduliert wird. Die Kohärenzlänge der gewählten Lichtquelle soll hierbei möglichst kleiner als die optische Verzögerungsstrecke $n_G \cdot \Delta D_G$ sein. Eine Detektionseinheit 626' für diese Variante der erfindungsgemäßen optischen Positionsmesseinrichtung ist in Figur 17 schematisiert dargestellt. Ein Strahlteiler 626.1, ausgebildet als Gitter, spaltet die beiden einfallenden, überlagerten Teilstrahlenbündel in zwei sekundäre, ebenfalls überlagerte Teilstrahlenbündel auf. Beide werden jeweils an einem Gitter 626.2, das starr mit dem Strahlteiler 626.1 verbunden ist, reflektiert und propagieren zurück zum Strahlteiler 626.1, welches dann als Vereinigungsgitter wirkt. Eines der beiden sekundären, überlagerten Teilstrahlenbündel durchläuft eine Glasplatte 626.3 zweimal, so dass darüber eine zweite optische Verzögerungsstrecke für die Teilstrahlenbündel ausgebildet wird. Die zweite optische Verzögerungsstrecke, d.h. die Dicke der Glasplatte 626.3, ist dabei so dimensioniert, dass sie mit derjenigen der ersten optischen Verzögerungsstrecke aus dem Aufbau gemäß Figur 15 übereinstimmt. Aufgrund der kurzen Kohärenzlänge der Lichtquelle 621 interferiert nur das Teilstrahlenbündel, das in der Abtastplatte 623 den kürzeren und in der zweiten Verzögerungsstrecke den längeren Weg durch die Glasplatte 626.3 durchlaufen hat, mit demjenigen Teilstrahlenbündel, das in der Abtastplatte 623 den längeren und in der zweiten Verzögerungsstrecke den kürzeren Weg durchlaufen hat. Alle anderen Paare von Teilstrahlenbündeln können aufgrund der kurzen Kohärenzlänge der Lichtquelle 621 nicht interferieren. Das beim Zurücklaufen der Teilstrahlenbündel als Vereinigungsgitter wirkende Gitter 626.1 ist in bekannter Art so ausgelegt, dass die in 0. und $\pm 1$. resultierender Beugungsordnung austretende Strahlenbündel zueinander um jeweils 120° phasenverschoben sind und durch entsprechende Detektorelemente 626.4a - 626.4c in Abtastsignale S+120, S0, S-120 gewandelt werden. Auch diese Variante ist besonders vorteilhaft, wenn eine optische Faserverbindung zwischen einerseits der Lichtquelle 621, dem Strahlteiler 622 und der Detektionseinheit 626' und andererseits der Abtastplatte 623 verwendet werden soll.

## Weitere Ausführungsmöglichkeiten

Neben den verschiedenen, bislang im Detail erläuterten Ausführungsbeispielen der erfindungsgemäßen optischen Positionsmesseinrichtung resultieren im Rahmen der vorliegenden Erfindung selbstverständlich weitere Ausführungsmöglichkeiten. Verschiedene Abwandlungsmöglichkeiten seien nachfolgend kurz angedeutet.

Durch eine Umstellung von Gl. 12 ergibt sich:

$$D_G = n_G \cdot D_E \ , \ a_2 = -\frac{\pi}{\lambda \cdot D_E} \qquad \text{(Gl. 15)}$$

$$\text{mit} \quad D_E = \frac{n_G \cdot D_A}{\sqrt{1 - (\lambda/d_M)^2}} \qquad \text{(Gl. 16)}$$

Die entsprechende erste Abtastteilung wird durch die Parameter $\lambda$, $n_G$ und $D_E$ vollständig bestimmt. Die Teilungsperiode $d_M$ der Messteilung geht dabei nicht direkt ein, sondern nur indirekt über die Länge $D_E$ gemäß Gl. 16. Solange die Länge $D_E$ konstant bleibt, können auch sehr unterschiedliche Teilungsperioden $d_M$ der Messteilung mit derselben Abtastoptik abgetastet werden. Dabei ist nur der Abtastabstand $D_A$ gemäß Gl. 16 leicht anzupassen, so dass die Länge $D_E$ konstant bleibt. Da die Abhängigkeit der Länge $D_E$ von der Teilungsperiode $d_M$ gering ist, kann auch ohne Anpassung des Abtastabstandes $D_A$ ein weiter Bereich von Teilungsperioden $d_M$ der Messteilung abgetastet werden.

In Kombination mit der großen Moiré-Kipptoleranz ergeben sich dadurch weitere Optionen. So ist es möglich, mit sehr großen Anbau- und Betriebstoleranzen auch als Radialteilungen ausgebildete Messteilungen abzutasten. Bei Radialteilungen variiert die lokale Teilungsperiode $d_M$ in radialer Richtung, während in azimutaler Richtung eine Moire-Kippung auftritt. So können mit ein und derselben Abtastoptik nicht nur lineare Messteilungen sondern auch Radialteilungen abgetastet werden, was einen erheblichen Vorteil für die Fertigung und den Service erfindungsgemäßer Positionsmesseinrichtungen bedeutet. Dieselbe Abtastoptik kann aber genauso eine Maßverkörperung mit einer Zirkularteilung abtasten. Mit einer Abtastoptik entsprechend der sechsten Ausführungsform lässt sich auch eine Messteilung, ausgebildet aus einer Überlagerung von Radial- und Zirkularteilung abtasten, die lokal wieder eine Kreuzgitterteilung darstellt.

In einer weiteren Variante der erfindungsgemäßen optischen Positionsmesseinrichtung können die beiden Teilstrahlenbündel auch durch andere polarisationsoptische Bauteile orthogonal polarisiert werden. So kann beispielsweise die erste Abtastteilung als kombiniertes diffraktives Bauelement ausgeführt werden, das neben der Funktion einer Ringlinse (gemäß Figur 2a) auch die Funktion der orthogonalen Polarisation beider Teilstrahlenbündel (gemäß Figur 2b) übernimmt. Diese Kombination führt zu einem ringförmigen Hochfrequenzgitter, das in zwei Hälften orthogonale Stegrichtungen aufweist und eine Überstruktur in Form einer Fresnellinse trägt. Die Erweiterung für eine unbegrenzte Moiré-Kippung Rz durch eine Kombination der Struktur aus den Figuren 9a und 9b ist natürlich ebenso möglich.

Weiterhin können im dritten Ausführungsbeispiel die $\lambda$/8-Verzögerungsplatten auch im Strahlengang zwischen der Messteilung und der ersten Abtastteilung eingebracht werden. Auch können statt der $\lambda$/8-Verzögerungsplatten zwei lineare, zueinander orthogonale Polarisatoren verwendet werden.

Wenn eine Abtastung einer als Kreuzgitter ausgebildeten Messteilung im vollen Moiré-Toleranzbereich von 360° notwendig ist, können die beiden Beugungsrichtungen der Messteilung durch eine unterschiedliche Wahl von Teilungsperioden in X- und Y-Richtung unterscheidbar gemacht werden. Zwei nebeneinander angeordnete Abtastoptiken bzw. Abtasteinheiten entsprechend der vierten Ausführungsform tasten dann eine derartige Messteilung ab. Sie sind jeweils so modifiziert, dass die erste Abtastoptik nur die X-und die zweite Abtastoptik nur die Y-Richtung der Messteilung abtastet. Dies kann z.B. dadurch erfolgen, dass die radiale Ausdehnung der zweiten Abtastteilungen der Reflektorelemente so klein gewählt wird, dass die Teilstrahlenbündel, die durch die jeweils nicht abzutastende Teilungsperiode der Messteilung entstehen, aufgrund eines etwas verschiedenen Radius $r_1$ nicht mehr auftreffen.

Wenn die geforderte Moiré-Kipptoleranz kleiner als +/-45° beträgt, kann man desweiteren die erste Abtastteilung und das Reflektorelement bzw. zweite Abtastteilungen auf Sektoren beschränkten. In den dazwischen liegenden Sektoren lassen sich anders dimensionierte erste bzw. zweite Abtastteilungen aufbringen. So kann je nach Montage der Abtastoptik relativ zur Maßverkörperung die eine oder andere Teil-Abtastoptik genutzt werden. Die unterschiedliche Dimensionierung der Teil-Abtastoptiken kann z.B. zur Abtastung sehr unterschiedlicher Teilungsperioden der Messteilung eingesetzt werden. Bei sehr unterschiedlichen Teilungsperioden der Messteilung können auch jeweils radial nebeneinander entsprechend dimensionierte erste bzw. zweite Abtastteilungen angeordnet sein, die je nach Teilungsperiode der verwendeten Messteilung aktiv genutzt oder nicht genutzt werden.

Für die polarisationsoptische Phasendetektion von orthogonal polarisierten Teilstrahlenbündeln gibt es im Stand der Technik mehrere bekannte Varianten. Sie werden meist in Verbindung mit polarisationskodierten Interferometern beschrieben. Dabei werden meist polarisierende und nicht polarisierende Strahlteiler in Kombination mit Verzögerungsplatten und Polarisatoren verwendet. Natürlich können solche bekannte, polarisationsoptische Phasendetektoren in der erfindungsgemäßen optischen Positionsmesseinrichtung ebenso verwendet werden.

Desweiteren ist es schließlich auch möglich, die erfindungsgemäße optische Positionsmesseinrichtung als Durchlichtsystem mit einer Maßverkörperung auszubilden, die eine transmittive Messteilung aufweist. In diesem Fall wäre dann in der Abtasteinheit die Lichtquelle und die Detektionseinheit auf einer Seite der Maßverkörperung angeordnet und auf der entgegengesetzten Seite die erste Abtastteilung und das Reflektorelement.

Ebenso wäre es im Rahmen der vorliegenden Erfindung grds. denkbar, die Lichtquelle sowie die Detektionseinheit nicht unmittelbar in der Abtasteinheit anzuordnen, sondern räumlich entfernt hiervon. Die Zuführung des Beleuchtungsstrahlenbündels zur Abtasteinheit bzw. die Zuführung der überlagerten Teilstrahlenbündel zur Detektionseinheit erfolgt dann über geeignete erste und zweite Lichtwellenleiter. In der Abtasteinheit fungiert dann das auskoppelseitige Ende des ersten Lichtwellenleiters als Lichtquelle und das einkoppelseitige Ende des zweiten Lichtwellenleiters als Detektionseinheit.

Die verschiedenen erläuterten Maßnahmen aus den einzelnen Ausführungsformen können natürlich auch in weiteren Varianten erfindungsgemäßer optischer Positionsmesseinrichtungen miteinander kombiniert werden usw..

**Patentansprüche**

1. Optische Positionsmesseinrichtung zur Erfassung der Relativposition einer Abtasteinheit und einer Maßverkörperung mit einer Messteilung, wobei die Abtasteinheit und die Maßverkörperung entlang mindestens einer Messrichtung (x) gegeneinander bewegbar sind und

   - die Abtasteinheit eine Lichtquelle, eine erste kreisringförmige Abtastteilung (24), ein Reflektorelement (25), ein Strahlteilelement (22) sowie eine Detektionseinheit (26) umfasst und
   - ein von der Lichtquelle emittiertes Strahlenbündel auf die Messteilung auftrifft, wo eine Aufspaltung in mindestens zwei Teilstrahlenbündel erfolgt,
   - die in Richtung der Abtasteinheit propagierenden Teilstrahlenbündel über die erste Abtastteilung auf das Reflektorelement auftreffen,
   - vom Reflektorelement die Teilstrahlenbündel eine Reflexion in Richtung der Messteilung erfahren und auf dem Weg zur Messteilung die erste Abtastteilung passieren und
   - nach der erneuten Beaufschlagung der Messteilung die in Richtung Abtasteinheit propagierenden Teilstrahlenbündel zur Überlagerung kommen und über das Strahlteilerelement eine Umlenkung in Richtung Detektionseinheit erfahren, wo mehrere positionsabhängige, phasenverschobene Abtastsignale erfassbar sind,
   **dadurch gekennzeichnet,**
   **dass** die erste Abtastteilung (24; 124; 224; 324; 424; 524.1, 524.2; 624) derart ausgebildet ist,
   - **dass** darüber eine Fokussierung der auf sie von der Messteilung (11; 111; 211; 311; 411; 511; 611) her einfallenden Teilstrahlenbündel auf das Reflektorelement (25; 125; 225; 325; 425; 525.1, 525.2; 625a, 625b) erfolgt und
- **dass** darüber eine Rekollimation der Teilstrahlenbündel erfolgt, die nach der Reflexion am Reflektorelement (25; 125; 225; 325; 425; 525.1, 525.2; 625a, 625b) in Richtung Messteilung (11; 111; 211; 311; 411; 511; 611) propagieren.

2. Optische Positionsmesseinrichtung nach Anspruch 1, **dadurch gekennzeichnet, dass**

- zumindest ein polarisationsoptisches Bauelement im Strahlengang der aufgespaltenen Teilstrahlenbündel angeordnet ist, über das die beiden an der Messteilung (11; 111; 211; 311; 411; 511) aufgespaltenen Teilstrahlenbündel eine linear oder zirkular orthogonale Polarisation zueinander erfahren und
- in der Detektionseinheit (26; 126; 226; 326; 526.1, 526.2) vor mehreren optoelektronischen Detektorelementen (26.4a - 26.4c; 126.4a - 126.4c; 326.4a - 326.4f; 426.4a - 426.4f) Polarisatoren (26.3a - 26.3c; 126.3a - 126.3c; 326.3a - 326.3f; 426.3a - 426.3f) angeordnet sind.

3. Optische Positionsmesseinrichtung nach Anspruch 2, **dadurch gekennzeichnet, dass** über das zumindest eine polarisationsoptische Bauelement entweder

- eine orthogonale Polarisation der Teilstrahlenbündel in zwei diametral angeordneten Sektoren resultiert oder
- eine lineare Polarisation resultiert, die azimutal ortsabhängig über den Umfang um 180° dreht.

4. Optische Positionsmesseinrichtung nach Anspruch 2, **dadurch gekennzeichnet, dass** als polarisationsoptisches Bauelement mindestens ein Hochfrequenzgitter im Abtaststrahlengang der Teilstrahlenbündel angeordnet ist.

5. Optische Positionsmesseinrichtung nach Anspruch 2, **dadurch gekennzeichnet, dass** das Reflektorelement (25; 125; 525.1, 525.2) als polarisationsoptisches Bauelement ausgebildet ist.

6. Optische Positionsmesseinrichtung nach Anspruch 2, **dadurch gekennzeichnet, dass** mehrere polarisationsoptische Bauelemente, ausgebildet als Verzögerungsplatten (227.1, 227.2) im Abtaststrahlengang der Teilstrahlenbündel zwischen der Messteilung (211) und der ersten Abtastteilung (224) oder zwischen der ersten Abtastteilung (224) und dem Reflektorelement (225) angeordnet sind.

7. Optische Positionsmesseinrichtung nach Anspruch 1, **dadurch gekennzeichnet, dass** nach der zweiten Beaufschlagung der Messteilung (11; 111; 211; 311; 411; 511; 611) die überlagerten Teilstrahlenbündel entlang der optischen Achse propagieren.

8. Optische Positionsmesseinrichtung nach Anspruch 1, **dadurch gekennzeichnet, dass** die erste Abtastteilung (24; 124; 224; 324; 424; 524.1, 524.2; 624) als diffraktive Ringlinse mit einer quadratischen Phasenfunktion gemäß

$$\phi_{A1}(r) = -\frac{\pi}{d_M \cdot r_0} \cdot r^2$$

ausgebildet ist, mit
$\Phi_{A1}(r)$ := radiusabhängige Phasenfunktion
$r$ := Radius
$d_M$ := Teilungsperiode der Messteilung
$r_0$ := radialer Abstand des auf die diffraktive Ringlinse treffenden Hauptstrahls

9. Optische Positionsmesseinrichtung nach Anspruch 1, **dadurch gekennzeichnet, dass** die Teilstrahlenbündel nach der ersten Beaufschlagung der ersten Abtastteilung (24; 124; 224; 324; 424; 524.1, 524.2; 624) parallel zur optischen Achse propagieren.

10. Optische Positionsmesseinrichtung nach Anspruch 1, **dadurch gekennzeichnet, dass** die erste Abtastteilung (24; 124; 224; 324; 424; 524.1, 524.2) und das Reflektorelement (25; 125; 225; 325; 425; 525.1, 525.2) mit Ausnahme der polarisationsoptischen Komponenten zylindersymmetrisch zur optischen Achse ausgebildet sind und das von der Lichtquelle (21; 121; 221; 321; 421; 521.1, 521.2) emittierte Strahlenbündel entlang der optischen Achse propagiert.

**11.** Optische Positionsmesseinrichtung nach Anspruch 1, **dadurch gekennzeichnet, dass** die Messteilung (11; 111; 211; 311; 411; 511; 611)

- als eindimensionale lineare Teilung oder
- als zweidimensionale lineare Teilung oder
- als Radialteilung oder
- als Zirkularteilung ausgebildet ist.

**12.** Optische Positionsmesseinrichtung nach Anspruch 1, **dadurch gekennzeichnet, dass** eine diffraktive Struktur (427) in dem Bereich einer Abtastplatte (423) angeordnet ist, den das von der Lichtquelle (421) emittierte Strahlenbündel durchläuft, wobei die diffraktive Struktur (427) als Kollimationslinse für das von der Lichtquelle (421) her einfallende Strahlenbündel und/oder als Gitterstrahlteiler für die von der Messteilung (411) her einfallenden überlagerten Teilstrahlenbündel dient und wobei auf der Vorder- und Rückseite der Abtastplatte (423) die erste Abtastteilung (424) und das Reflektorelement (425) oder umgekehrt angeordnet sind.

**13.** Optische Positionsmesseinrichtung nach Anspruch 1, **dadurch gekennzeichnet, dass** die Detektionseinheit (26; 126; 226; 326; 526.1, 526.2) einen Strahlteiler (26.2; 126.2; 326.2) aufweist, welcher die einfallenden überlagerten Teilstrahlenbündel räumlich aufspaltet und die aufgespaltenen Teilstrahlenbündel jeweils Polarisatoren (26.3a - 26.3c; 126.3a - 126.3c; 326.3a - 326.3f; 426.3a - 426.3f) durchlaufen, bevor sie auf optoelektronische Detektorelemente (26.4a - 26.4c; 126.4a - 126.4c; 326.4a - 326.4f; 426.4a - 426.4f) auftreffen.

**14.** Optische Positionsmesseinrichtung nach Anspruch 13, **dadurch gekennzeichnet, dass** der Strahlteiler (26.2; 126.2; 326.2) als Gitterstrahlteiler ausgebildet ist.

**15.** Optische Positionsmesseinrichtung nach Anspruch 1, **dadurch gekennzeichnet, dass** im Strahlengang eines Teilstrahlenbündels eine optische Verzögerungsstrecke ($n_G \cdot \Delta D_G$) angeordnet ist.

**Claims**

**1.** Optical position-measuring device for detecting the relative position of a scanning unit and a material measure with a measuring graduation, in which the scanning unit and the material measure are movable against one another along at least one measuring direction (x) and

- the scanning unit comprises a light source, a first annular scanning graduation (24), a reflector element (25), a beam-splitting element (22) and a detection unit (26), and
- a beam emitted by the light source strikes the measuring graduation, where a splitting into at least two partial beams takes place,
- the partial beams propagating in the direction of the scanning unit strike the reflector element via the first scanning graduation,
- the partial beams experience a reflection by the reflector element in the direction of the measuring graduation, and pass the first scanning graduation on the way to the measuring graduation, and
- after renewed exposure of the measuring graduation, the partial beams propagating in the direction of the scanning unit come to overlap and, via the beam splitter element, experience a deflection in the direction of the detection unit where a plurality of position-dependent, phase-shifted scanning signals are detectable, **characterized**
- **in that** the first scanning graduation (24; 124; 224; 324; 424; 524.1, 524.2; 624) is designed in such a way
- that thereby the partial beams incident on it from the measuring graduation (11; 111; 211; 311; 411; 511; 611) are focused onto the reflector element (25; 125; 225; 325; 425; 525.1, 525.2; 625a, 625b), and
- **in that** thereby there is a recollimation of the partial beams which propagate in the direction of the measuring graduation (11; 111; 211; 311; 411; 511; 611) after reflection at the reflector element (25; 125; 225; 325; 425; 525.1, 525.2; 625a, 625b).

**2.** Optical position measuring device according to Claim 1, **characterized in that**

- there is arranged in the beam path of the split partial beams at least one optical polarization component via which the two partial beams split at the measuring graduation (11; 111; 211; 311; 411; 511) experience a linear or circular orthogonal polarization to one another, and
- polarizers (26.3a - 26.3c; 126.3a - 126.3c; 326.3a - 326.3f; 426.3a - 426.3f) are arranged in the detection unit (26; 126; 226; 326; 526.1, 526.2) upstream of a plurality of optoelectronic detector elements (26.4a - 26.4c; 126.4a - 126.4c; 326.4a - 326.4f; 426.4a - 426.4f).

3. Optical position measuring device according to Claim 2, **characterized in that** as a result of the at least one optical polarization component either

- the partial beams are orthogonally polarized in two diametrically arranged sectors, or
- there is a linear polarization which rotates in azimuth by 180° depending on location over the circumference.

4. Optical position measuring device according to Claim 2, **characterized in that** at least one high-frequency grating is arranged as optical polarization component in the scanning beam path of the partial beams.

5. Optical position measuring device according to Claim 2, **characterized in that** the reflector element (25; 125; 525.1, 525.2) is designed as an optical polarization component.

6. Optical position measuring device according to Claim 2, **characterized in that** a plurality of optical polarization components, designed as delay plates (227.1, 227.2) are arranged in the scanning beam path of the partial beams between the measuring graduation (211) and the first scanning graduation (224), or between the first scanning graduation (224) and the reflector element (225).

7. Optical position measuring device according to Claim 1, **characterized in that** the superimposed partial beams propagate along the optical axis after the second exposure of the measuring graduation (11; 111; 211; 311; 411; 511; 611).

8. Optical position measuring device according to Claim 1, **characterized in that** the first scanning graduation (24; 124; 224; 324; 424; 524.1, 524.2; 624) is designed as a diffractive ring lens with a quadratic phase function in accordance with

$$\phi_{A1}(r) = -\frac{\pi}{d_M \cdot r_0} \cdot r^2$$

where
$\Phi_{A1}(r)$: = phase function dependent on radius,
r: = radius,
$d_M$: = graduation period of the measuring graduation,
$r_0$: = radial distance of the main beam striking the diffractive ring lens.

9. Optical position measuring device according to Claim 1, **characterized in that** the partial beams propagate parallel to the optical axis after the first exposure of the first scanning graduation (24; 124; 224; 324; 424; 524.1; 524.2; 624).

10. Optical position measuring device according to Claim 1, **characterized in that**, with the exception of the optical polarization components, the first scanning graduation (24; 124; 224; 324; 424; 524.1, 524.2) and the reflector element (25; 125; 225; 325; 425; 525.1, 525.2) are designed with cylindrical symmetry to the optical axis, and the beam emitted by the light source (21; 121; 221; 321; 421; 521.1; 521.2) propagates along the optical axis.

11. Optical position measuring device according to Claim 1, **characterized in that** the measuring graduation (11; 111; 211; 311; 411; 511; 611) is designed

- as a one-dimensional linear graduation, or
- as a two-dimensional linear graduation, or
- as a radial graduation, or
- as a circular graduation.

**12.** Optical position measuring device according to Claim 1, **characterized in that** a diffractive structure (427) is arranged in the region of a scanning plate (423) through which the beam emitted by the light source (421) passes, the diffractive structure (427) serving as collimation lens for the beam incident from the light source (421), and/or as grating beam splitter for the superimposed partial beams incident from the measuring graduation (411), and the first scanning graduation (424) and the reflector element (425) being arranged on the front and back of the scanning plate (423), or vice versa.

**13.** Optical position measuring device according to Claim 1, **characterized in that** the detection unit (26; 126; 226; 326; 526.1; 526.2) has a beam splitter (26.2; 126.2; 326.2) which splits the incident superimposed partial beams spatially, and the split partial beams respectively pass through polarizers (26.3a - 26.3c; 126.3a - 126.3c; 326.3a - 326.3f; 426.3a - 426.3f) before they strike optoelectronic detector elements (26.4a - 26.4c; 126.4a - 126.4c; 326.4a - 326.4f; 426.4a - 426.4f).

**14.** Optical position measuring device according to Claim 13, **characterized in that** the beam splitter (26.2; 126.2; 326.2) is designed as a grating beam splitter.

**15.** Optical position measuring device according to Claim 1, **characterized in that** an optical delay line ($n_G.\Delta D_G$) is arranged in the beam path of a partial beam.

## Revendications

**1.** Dispositif de mesure optique de position destiné à détecter la position relative d'une unité de balayage et d'un corps d'étalonnage comportant une division de mesure, dans lequel l'unité de balayage et le corps d'étalonnage sont mobiles en sens opposé le long d'au moins une direction de mesure (x), et

- l'unité de balayage comprend une source de lumière, une première division de balayage en forme d'anneau circulaire (24), un élément réflecteur (25), un élément diviseur de faisceau (22) ainsi qu'une unité de détection (26), et
- un faisceau de rayons émis par la source de lumière est incident sur la division de mesure, sur laquelle il se produit une division en au moins deux faisceaux de rayons partiels,
- les faisceaux de rayons partiels se propageant dans la direction de l'unité de balayage sont incidents par l'intermédiaire de la première division de balayage sur l'élément réflecteur,
- les faisceaux de rayons sont soumis par l'élément réflecteur à une réflexion dans la direction de la division de mesure et passent par la première division de balayage sur le chemin allant vers la division de mesure, et
- après avoir été une nouvelle fois incidents sur la division de mesure, les faisceaux de rayons partiels se propageant dans la direction de l'unité de balayage se superposent et sont soumis par l'élément diviseur de faisceau à une déviation dans la direction de l'unité de détection, au niveau de laquelle une pluralité de signaux de balayage déphasés et dépendant de la position peuvent être détectés,
**caractérisé en ce que** la première division de balayage (24 ; 124 ; 224 ; 324 ; 424 ; 524.1, 524.2 ; 624) est conçue de manière
- à ce qu'il se produise par l'intermédiaire de celle-ci une focalisation des faisceaux de rayons partiels incidents sur celle-ci en provenance de la division de mesure (11 ; 111 ; 211 ; 311 ; 411 ; 511 ; 611) sur l'élément réflecteur (25 ; 125 ; 225 ; 325 ; 425 ; 525.1, 525.2 ; 625a, 625b), et
- à ce qu'il se produise par l'intermédiaire de celle-ci une recollimation des faisceaux de rayons partiels qui se propagent, après réflexion sur l'élément réflecteur (25 ; 125 ; 225 ; 325 ; 425 ; 525.1, 525.2 ; 625a, 625b), dans la direction de la division de mesure (11 ; 111 ; 211 ; 311 ; 411 ; 511 ; 611).

**2.** Dispositif de mesure optique de position selon la revendication 1, **caractérisé**

- **en ce qu'**au moins un composant optique de polarisation est disposé sur le chemin optique des faisceaux de rayons partiels divisés, par l'intermédiaire duquel les deux faisceaux de rayons partiels divisés sur la division de mesure (11 ; 111 ; 211 ; 311 ; 411 ; 511) sont soumis à une polarisation linéaire ou circulaire orthogonale l'un par rapport à l'autre, et
- **en ce que** des polariseurs (26.3a - 26.3c ; 126.3a - 126.3c ; 326.3a - 326.3f ; 426.3a - 426.3f) sont disposés dans l'unité de détection (26 ; 126 ; 226 ; 326 ; 526.1, 526.2) en amont d'une pluralité d'éléments détecteurs optoélectroniques (26.4a - 26.4c ; 126.4a - 126.4c ; 326.4a - 326.4f ; 426.4a - 426.4f).

**3.** Dispositif de mesure optique de position selon la revendication 2, **caractérisé en ce que**, au moyen d'au moins un composant optique de polarisation, il résulte soit

    - une polarisation orthogonale des faisceaux de rayons partiels dans deux secteurs diamétralement disposés, soit

    - une polarisation linéaire qui tourne en azimut de 180° sur le trajet en fonction du lieu.

**4.** Dispositif de mesure optique de position selon la revendication 2, **caractérisé en ce qu'**il est prévu, en tant que composant optique de polarisation, au moins un réseau de diffraction à haute fréquence le long du chemin optique de balayage des faisceaux de rayons partiels.

**5.** Dispositif de mesure optique de position selon la revendication 2, **caractérisé en ce que** l'élément réflecteur (25 ; 125 ; 525.1, 525.2) est réalisé sous la forme d'un composant optique de polarisation.

**6.** Dispositif de mesure optique de position selon la revendication 2, **caractérisé en ce que** plusieurs composants optiques de polarisation, réalisés sous la forme de lames à retard (227.1, 227.2), sont disposés sur le chemin optique de balayage des faisceaux de rayons partiels entre la division de mesure (211) et la première division de balayage (224) ou entre la première division de balayage (224) et l'élément réflecteur (225).

**7.** Dispositif de mesure optique de position selon la revendication 1, **caractérisé en ce que**, après avoir été une seconde fois incidents sur la division de mesure (11 ; 111 ; 211 ; 311 ; 411 ; 511 ; 611), les faisceaux de rayons partiels superposés se propagent le long de l'axe optique.

**8.** Dispositif de mesure optique de position selon la revendication 1, **caractérisé en ce que** la première division de balayage (24 ; 124 ; 224 ; 324 ; 424 ; 524.1, 542.2 ; 624) est réalisée sous la forme d'une lentille annulaire diffractante possédant une fonction de phase quadratique définie par

$$\Phi_{A1}(r) = -\frac{\pi}{d_M r_0} \cdot r^2$$

où
$\Phi_{A1}(r)$:= fonction de phase dépendant du rayon
$r$ := rayon
$d_M$ := période de division de la division de mesure
$r_0$ := distance radiale du rayon principal incident sur la lentille annulaire diffractante.

**9.** Dispositif de mesure optique de position selon la revendication 1, **caractérisé en ce que** les faisceaux de rayons partiels se propagent parallèlement à l'axe optique après avoir été incidents une première fois sur la première division de balayage (24 ; 124 ; 224 ; 324 ; 424 ; 524.1, 524.2 ; 624).

**10.** Dispositif de mesure optique de position selon la revendication 1, **caractérisé en ce que** la première division de balayage (24 ; 124 ; 224 ; 324 ; 424 ; 524.1, 524.2) et l'élément réflecteur (25 ; 125 ; 225 ; 325 ; 425 ; 525.1, 525.2), à l'exclusion des composants optiques de polarisation, sont réalisés de manière à présenter une symétrie cylindrique par rapport à l'axe optique, et le faisceau de rayons émis par la source de lumière (21 ; 121 ; 221 ; 321 ; 421 ; 521.1, 521.2) se propage le long de l'axe optique.

**11.** Dispositif de mesure optique de position selon la revendication 1, **caractérisé en ce que** la division de mesure (11 ; 111 ; 211 ; 311 ; 411 ; 511 ; 611) est réalisée

    - sous la forme d'une division linéaire monodimensionnelle ou
    - sous la forme d'une division linéaire bidimensionnelle ou
    - sous la forme d'une division radiale ou
    - sous la forme d'une division circulaire.

**12.** Dispositif de mesure optique de position selon la revendication 1, **caractérisé en ce qu'**une structure diffractante (427) est disposée dans la région d'une lame de balayage (423) qui est traversée par les faisceaux de rayons émis par la source de lumière (421), dans lequel la structure diffractante (427) joue le rôle de lentille de collimation pour les faisceaux de rayons incidents en provenance de la source de lumière (421) et/ou de diviseur de rayon à réseau de diffraction pour les faisceaux de rayons partiels superposés incidents en provenance de la division de mesure (411) et dans lequel la première division de balayage (424) et l'élément réflecteur (425) sont disposés sur la face avant et la face arrière de la lame de balayage (423) ou inversement.

13. Dispositif de mesure otique de position selon la revendication 1, **caractérisé en ce que** l'unité de détection (26 ; 126 ; 226 ; 326 ; 526.1, 526.2) comprend un diviseur de faisceau (26.2 ; 126.2 ; 326.2) qui divise spatialement les faisceaux de rayons partiels superposés incidents et **en ce que** les faisceaux de rayons partiels divisés passent à travers des polariseurs respectifs (26.3a - 26.3c ; 126.3a - 126.3c ; 326.3a - 326.3f ; 426.3a - 426.3f) avant d'atteindre des éléments détecteurs optoélectroniques (26.4a - 26.4c ; 126.4a - 126.4c ; 326.4a - 326.4f ; 426.4a - 426.4f).

14. Dispositif de mesure optique de position selon la revendication 13, **caractérisé en ce que** le diviseur de faisceau (26.2 ; 126.2 ; 326.2) est réalisé sous la forme d'un diviseur de faisceau à réseau de diffraction.

15. Dispositif de mesure optique de position selon la revendication 1, **caractérisé en ce qu'**une ligne à retard optique ($n_G.\Delta D_G$) est disposée sur le chemin optique d'un faisceau de rayons partiel.

FIG. 1

FIG. 2a

24

FIG. 2b

25

FIG. 3

FIG. 4

FIG. 5a

FIG. 5b

123a

124

123b

125

FIG. 6

FIG. 7

FIG. 8

FIG. 9a

324

FIG. 9b

325

FIG. 10

FIG. 11

FIG. 12

427

FIG. 13

EP 2 474 815 B1

FIG. 14

525.2          523          525.1

EP 2 474 815 B1

FIG.15

FIG.16

FIG. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6831267 B2
- US 6831267 B
- US 5696374 A
- EP 1435510 A
- DE 102004053082 A1
- WO 2011000715 A1

**In der Beschreibung aufgeführte Nicht-Patentliteratur**

- **WANJI YU et al.** Reduced wavelengthdependent quarter-wave plate fabricated by a multilayered subwavelength structure. *Appl. Optics,* 2006, vol. 45 (12), 2601ff
- **M. BORN ; E. WOLF.** Principles of Optics. Cambridge University Press, 1999, 32, , 33
- **SUSUMU MAKINOUCHI et al.** An evaluation of a modulated laser encoder. *Prec. Eng,* 2011, vol. 35, 302-308

37